# EUROPÄISCHE PATENTSCHRIFT

(11) **EP 3 644 554 B1**
(45) Veröffentlichungstag und Bekanntmachung des Hinweises auf die Patenterteilung: **22.09.2021**
(21) Anmeldenummer: 19203972.5
(22) Anmeldetag: 18.10.2019
(51) Int. Cl.: H04L 12/12

(54) **VERFAHREN FÜR EINE ENTNAHMEEINHEIT UND ZUGEHÖRIGE ENTNAHMEEINHEIT**
METHOD FOR A REMOVAL UNIT AND CORRESPONDING REMOVAL UNIT
PROCÉDÉ POUR UNE UNITÉ DE PRÉLÈVEMENT ET UNITÉ DE PRÉLÈVEMENT ASSOCIÉE

(30) Priorität: 22.10.2018 DE 102018126214
(43) Veröffentlichungstag der Anmeldung: 29.04.2020
(73) Patentinhaber: KWC AG, 6052 Hergiswil (CH)
(72) Erfinder: Keel, Manuel, 5103 Wildegg (CH); Erni, Marco, 5632 Buttwil (CH)
(74) Vertreter: Lemcke, Brommer & Partner Patentanwälte Partnerschaft mbB

(56) Entgegenhaltungen:
- DE-A1-102016 105 595
- US-A1- 2003 178 894
- US-A1- 2004 133 314
- TOMPROS S ET AL: "Enabling applicability of energy saving applications on the appliances of the home environment", IEEE NETWORK, IEEE SERVICE CENTER, NEW YORK, NY, US, Bd. 23, Nr. 6, 1. November 2009 (2009-11-01), Seiten 8-16, XP011285839, ISSN: 0890-8044, DOI: 10.1109/MNET.2009.5350347

## Beschreibung

Die Erfindung betrifft ein Verfahren zum Anpassen eines Steuermenüs einer Steuerung einer Entnahmeeinheit für Trinkwasser mit einem Befehlseingabeelement zum Wählen eines Steuermenüpunkts des Steuermenüs, insbesondere ein Dreh-Druckknopf. Ferner bezieht sich die Erfindung auf eine Entnahmeeinheit für Trinkwasser umfassend eine Steuerung mit einem Steuermenü mit Steuermenüpunkten, ein Befehlseingabeelement zum Wählen eines Steuermenüpunkts, insbesondere ein Dreh-Druckknopf, wobei die Entnahmeeinheit mit anderen Funktionseinheiten verbindbar ist.

Es sind Entnahmeeinheiten für Trinkwasser bekannt, die mit Wasserfunktionseinheiten sowohl elektrisch als auch fluidleitend verbunden werden. Es können hierbei mehrere Wasserfunktionseinheiten mit unterschiedlichen Funktionen an eine Entnahmeeinheit angeschlossen werden. Bei bekannten Entnahmeeinheiten ist hierzu eine unter der Arbeitsfläche installierte Steuerung vorgesehen, mit der die einzelnen Wasserfunktionseinheiten verbunden sind, um diese anzusteuern und die von den Funktionseinheiten kommenden Wasserleitungen an die eigentliche Entnahmeeinheit anzuschließen. Damit unterschiedliche Wasserfunktionseinheiten durch die Entnahmeeinheit entsprechend angesteuert werden können, muss deren Steuerung aufwendig programmiert werden. Entnahmeeinheiten weisen typischerweise nur sehr einfache Befehlseingabeelemente auf, die eine Bedienung und Programmieren der Entnahmeeinheit weiter erschwert. Alternativ kann eine gemäß der Anzahl und Funktion der Wasserfunktionseinheiten angepasste Hardwaresteuerung vorgesehen sein. Die Hardwaresteuerung muss speziell an die Art und Anzahl der Wasserfunktionseinheiten angepasst sein, was zu hohen Kosten für die Steuerung führt.

Aus der US2004/0133314 A1 ist eine die Steuerung von Energieverbrauchern in einem Energieverteilnetz bekannt. Hierzu ist pro Verbrauchsstelle ein Gateway-Knoten vorgesehen, der mit einem netzseitigen Steuerungssystem verbunden ist. An den Gateway-Knoten können mehrere Steuerungsknoten angeschlossen werden, über die einzelne Endgeräte gesteuert werden können. Über ein User Interface kann der Nutzer auf das Steuerungssystem zugreifen und die einzelnen Steuerungsknoten überwachen oder ansteuern. Die Schrift erwähnt, dass das Steuerungssystem auch für andere Anwendungen wie etwa die Verteilung von Wasser, gekühltem oder erhitztem Wasser, Trinkwasser oder recyceltem Wasser anwendbar sein soll. Wie und mit welchem Funktionsumfang dies geschehen soll, ist nicht beschrieben.

In der WO 2016/131500 A1 ist als Entnahmeeinheit ein Wasserhahn mit einem einfachen Dreh-Druckknopf offenbart. Der Wasserhahn ist mit einer separaten Wasserentnahme-Steuerung verbunden und umfasst mit der Wasserentnahme-Steuerung verbundene Steuerventile zum Steuern von Wasserflüssen aus dem Wasserhahn. An den Wasserhahn ist eine Kaltwasser-Quelle oder eine Mischwasser-Quelle und mindestens eine zusätzliche Wasserquelle angeschlossen, die eine Filterwasser-Quelle, eine Kühlwasser-Quelle, eine Kohlensäurewasser-Quelle und eine Siedendwasser-Quelle sein kann.

Da an dem Wasserhahn als Befehlseingabeelement lediglich ein Dreh-Druckknopf mit einer schlichten Anzeige in Form eines mehrfarbigen Leuchtrings zur Verfügung steht, muss die Ansteuerung der unterschiedlichen Wasserquellen, um entsprechend aufbereitetes Wasser zu entnehmen, durch eine Abfolge von Befehlseingaben, also Drehen und Drücken des Dreh-Druckknopfes erfolgen. Hierzu werden in einem Steuerungsmenü des Dreh-Druckknopfs einzelne Menüpunkte angesteuert. Das Steuermenü muss daher an Art und Anzahl der angeschlossenen Wasserfunktionseinheiten entsprechend angepasst sein, was bei der Installation eine aufwendige Programmierung bzw. Konfiguration erfordert. Ferner können nur Wasserquellen und zugehörige Steuerventile an die Entnahmeeinheit angeschlossene werden. Somit ist eine Integration der Entnahmeeinheit in ein Netzwerk aus einer Vielzahl von Geräten, die zum Teil keine wasserabgebende Funktion aufweisen, nicht vorgesehen. Daher ist die in dieser Druckschrift gelehrte Entnahmeeinheit nicht netzwerkfähig und somit auch nicht in einfacher Weise mit einer Hausautomatisation verbindbar.

Wenngleich die bekannten Entnahmeeinheiten für Trinkwasser ihre Funktion erfüllen, bietet der Bereich der Entnahmeeinheiten für Trinkwasser noch Raum für Verbesserungen.

Der Erfindung liegt die Aufgabe zugrunde, ein Verfahren für eine Entnahmeeinheit für Trinkwasser als auch solch eine Entnahmeeinheit bereitzustellen, die mit sehr geringem Aufwand eingerichtet und vorzugsweise in ein Hausautomatisationsnetzwerk integriert werden kann.

Erfindungsgemäß wird die Aufgabe durch ein Verfahren für eine Entnahmeeinheit für Trinkwasser mit den Merkmalen des Anspruchs 1 gelöst. Ferner löst die Entnahmeeinheit für Trinkwasser nach Anspruch 14 die Aufgabe. Vorteilhafte Ausgestaltungen und Weiterbildungen der Erfindung ergeben sich aus den abhängigen Ansprüchen.

Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Das erfindungsgemäße Verfahren zum automatischen Anpassen eines Steuermenüs mit Steuermenüpunkten einer Steuerung einer Entnahmeeinheit für Trinkwasser mit einem Befehlseingabeelement in Form eines Dreh-Druckknopfes, wobei die Entnahmeeinheit mit ein oder mehreren als Funktionseinheiten dienenden Geräten kommunikationstechnisch zu einem Netzwerk verbunden ist, führt folgende Schritte aus:
- Verbinden eines neuen Geräts mit dem Netzwerk,
- Senden einer physischen Adresse des neuen Geräts über das Netzwerk an die Entnahmeeinheit,
- Erstellen eines neuen Geräteregisters mit der physischen Adresse des neuen Geräts in der Steuerung der Entnahmeeinheit, und
- automatisches Anpassen des Steuermenüs der Entnahmeeinheit an das neue Geräteregister durch automatisches Anlegen eines Steuermenüpunktes in dem Steuermenü, der für das neue Gerät steht, sodass das neue Gerät über die Entnahmeeinheit ansteuerbar wird.

Aufgrund der automatischen Anpassung der Steuermenüpunkte in dem Steuermenü kann ein einfaches Befehlseingabeelement (Bedienelement) verwendet werden, welches nur wenige Einstellmöglichkeiten aufweist. Das automatische Anpassen unterstützt die Verwendung solch einfacher Befehlseingabeelemente wie Dreh-Druckknöpfe, da ein unübersichtliches händisches Programmieren der Steuerung über das Befehlseingabeelement entfällt.

Die Entnahmeeinheit kann ein Wasserhahn sein, der mit einem Ventil für das Öffnen und Schließen der Trinkwasserausgabe zusammenwirkt. Ferner ist an der Entnahmeeinheit ein Befehlseingabeelement für das Steuermenü vorgesehen, mittels dessen ein Nutzer durch das Steuermenü navigieren und Steuermenüpunkte verschiedener Funktionen der Entnahmeeinheit bzw. mit dieser verbundener Funktionseinheiten anwählen kann. Das Befehlseingabeelement ist ein Dreh-Druckknopf bzw. Dreh-Druckwahlschalter. Das Steuermenü wird durch die Hardwarekomponenten der Steuerung der Entnahmeeinheit ausgeführt und stellt ein Interface zwischen einem Nutzer und der Entnahmeeinheit dar. Die Steuerung kann auf einer Platine in der Entnahmeeinheit bereitgestellt werden. Die Platine kann vorzugsweise in dem Befehlseingabeelement eingebaut sein und unmittelbar Befehle des Nutzers entgegennehmen. Alternativ kann die Steuerung außerhalb der Entnahmeeinheit angeordnet sein, und über eine Kabelverbindung oder eine Funkverbindung mit der Entnahmeeinheit kommunizieren.

Das Verbinden des neuen Geräts mit dem Netzwerk kann drahtlos oder durch eine drahtgebundene Verbindung erfolgen. Insbesondere kann die Steuerung der Entnahmeeinheit mit einer internen Funkantenne für eine drahtlose Verbindung ausgestattet sein oder mit einer externen Antenne verbunden werden. Beispielsweise ist eine Bluetooth-, eine Zigbee-, eine WiFi-, eine 2,4 GHz- und/oder 5 GHz-Funkverbindung, eine DECT-, eine EEBUS-, eine IEEE-Verbindung möglich. Alternativ oder ergänzend kann die Verbindung über Ethernet mit einer LAN-Verkabelung realisiert werden. Bei einer bevorzugten Ausführung sind die Geräte und die Entnahmeeinheit über ein serielles Bus-System oder einen Feldbus, insbesondere einen CAN-Bus (Controller Area Network) miteinander verbunden. Das Netzwerk kann ein lokales als auch ein mit dem Internet verbundenes Netzwerks sein. Ferner kann das Netzwerk in Form einer Cloud mit einer Vielzahl von Geräten ausgebildet sein. Durch die Vielzahl der Möglichkeiten, eine Verdingung zwischen dem Netzwerk und der Entnahmeeinheit herzustellen, kann die Entnahmeeinheit an einem beliebigen Ort positioniert werden und dennoch mit hoher Übertragungsqualität an das Netzwerk angebunden werden.

Nachdem das neue Gerät mit dem Netz verbunden ist, sendet es eine physische Adresse über eine Datenverbindung in das Netzwerk. Die physische Adresse kann eine Hardware-Adresse des Netzwerkadapters eines jeweiligen Gerätes wie etwa eine MAC-Adresse, eine Seriennummer des Geräts, eine Modellnummer des Geräts, eine Ethernet-ID oder eine andere gerätefeste Kennung sein, die insbesondere Eigenschaften des Geräts eindeutig einem individuellen Gerät in dem Netzwerk zuordnet. Über das Netzwerk wird die physische Adresse an die Entnahmeeinheit übermittelt. Die am Netzwerk teilnehmenden Geräte sind im Geräteregister auf vorzugsweise den einzelnen Geräten abgespeichert, sodass jedes Gerät die übrigen Netzwerkteilnehmer und insbesondere ihre Eigenschaften kennt. Dadurch wird eine transparente und leicht handhabbare Netzwerkstruktur erzeugt.

Die Steuerung der Entnahmeeinheit erkennt automatisch das Vorliegen einer neuen physischen Adresse, die für das neue Gerät steht, und liest die neue physische Adresse und erstellt selbstständig anhand der neuen physischen Adresse ein neues Geräteregister aller am Netzwerk teilnehmenden Geräte inklusive des neuen Gerätes. Dieses Geräteregister ist vorzugsweise lokal auf der Steuerung der Entnahmeeinheit gespeichert. Durch die Automatisation wird ein nutzerfreundliches Einrichten der Entnahmeeinheit ermöglicht.

Die Steuerung erstellt anhand des neuen Geräteregisters automatisch ein neues Steuermenü für die Entnahmeeinheit. Dazu liest die Steuerung das neue Geräteregister aus und verändert ein bestehendes Steuermenü entsprechend der neuen Eigenschaft des neuen Geräts. Das neue Steuermenü beinhaltet wenigstens einen neuen Steuermenüpunkt für das neue Gerät und dessen Funktion, sodass es durch die Entnahmeeinheit berücksichtigt werden kann. Beispielsweise kann das neue Gerät Funktionen der Entnahmeeinheit erweitern oder beschränken. Ferner kann das neue Gerät durch das Befehlseingabeelement der Entnahmeeinheit angesteuert werden.

Durch die erfindungsgemäß vorgeschlagene Lösung wird automatisch das Steuermenü an die Netzwerkteilnehmer angepasst. Dadurch können sehr einfach neue Geräte nach Nutzerwunsch angeschlossen werden, ohne dass fachliche Kenntnisse über die Geräte oder das Netzwerk notwendig sind. Ein Nutzer kann somit die Vielfalt an Funktionen moderner netzwerkfähige Geräte ausschöpfen und gleichzeitig Kosten und Zeit sparend, das entsprechende Netzwerk hierfür einzurichten. Insbesondere für das Einrichten einer Hausautomatisation ist solch eine automatische Entnahmeeinheit von größtem Nutzen, da sie lediglich mit dem Netzwerk gekoppelt werden muss, um sie vollständig an die bestehenden Geräte anzupassen. Vorzugsweise kann ein einfaches Befehlseingabeelement verwendet werden, welches nur wenige Einstellmöglichkeiten aufweist.

Grundsätzlich sind zwei Fallgestaltungen denkbar, nach denen ein neues Gerät hinzugefügt wird. Es kann im ersten Fall vorkommen, dass bereits Geräte im Netzwerk vorhanden und in Betrieb sind und dass dann zu einem späteren Zeitpunkt ein neues Gerät hinzukommt, z.B. indem das neue Gerät an das Netzwerk angeschlossen oder indem zu diesem späteren Zeitpunkt die Energieversorgung des Geräts in Betrieb genommen wird. Im zweiten Fall kann es vorkommen, dass alle Geräte am Bus werden gleichzeitig eingeschaltet werden. Gemäß einer vorteilhaften Ausgestaltung der Erfindung kann vorgesehen sein, dass der erste Fall auf den zweiten Fall übergeführt wird, indem bei allen Geräten ein Reset durchgeführt wird, sobald ein neues Gerät am Bus erkannt wird.

Im Rahmen der vorliegenden Erfindung kann außerdem vorgesehen sein, dass ein Gerät im Anschluss an das Senden seiner Netzwerkadresse eine Featureliste, also eine Liste mit den von diesem Gerät unterstützten Funktionen übermittelt. Geräte, die dies empfangen, speichern vorzugsweise die Featureliste in der Gerätetabelle ab.

Vorteilhafterweise kann ein automatisches Anlegen eines Steuermenüpunktes in dem Steuermenü erfolgen, der in der Steuerung der Entnahmeeinheit das neue Gerät repräsentiert. Dabei kann ein Steuermenüpunkt für eine Funktion des neuen Geräts in dem Steuermenü eingerichtet werden, sodass mittels des Befehlseingabeelements der Steuermenüpunkt angewählt werden kann. Durch Anwählen des Steuermenüpunkts kann das neue Gerät angesteuert werden und seine Funktion ausüben. Beispielsweise kann die Funktion darin bestehen Trinkwasser in einer bestimmten Aufbereitungsform der Entnahmeeinheit zuzuführen, sodass ein Nutzer anhand des Steuermenüpunkts bestimmtes Trinkwasser wählen und entnehmen kann. Ferner kann das neue Gerät anhand seiner Funktion einen Steuermenüpunkt automatisch löschen oder sperren. Aufgrund dieses vorteilhaften automatischen Anlegens, Löschens oder Sperrens eines neuen Steuermenüpunktes kann ein Nutzer zeitsparend das Netzwerk mit neuen Geräten ohne fachmännisches Wissen bestücken.

Eine besondere Weiterbildung der Erfindung kann ein automatisches Sperren der Entnahmeeinheit durch das Steuermenü vorsehen, wenn die Steuerung der Entnahmeeinheit einen Konflikt zwischen einem ersten und einem zweiten Gerät im Netzwerk erkennt. Ein solcher Konflikt kann sich durch entgegengesetzt wirkende Funktionen ergeben. Beispielsweise könnten Geräte, die kochendes und kohlensäurehaltiges Wasser bereitstellen, in Konflikt stehen, da sie nicht gleichzeitig Wasser an die Entnahmeeinheit liefern sollten. Ferner können Geräte auch in einem energetischen Konflikt zueinanderstehen. Weisen zwei Geräte eine hohe elektrische Leistung auf, dann können die beiden Geräte unter Umständen nicht gleichzeitig betrieben werden. Diese Geräte können mittels einer Energiemesseinrichtung priorisiert und nacheinander mit elektrischer Energie versorgt werden. Insbesondere kann hierbei die Energiemesseinrichtung als neues Gerät in das Geräteregister eingetragen werden und somit Einfluss auf das Steuermenü nehmen. Die Energiemesseinrichtung kann dafür Sorge tragen, dass ein erstes Gerät mit Energie versorgt wird, welches beispielsweise kein Wasser an die Entnahmeeinheit liefert, sodass ein zweites Gerät, welches aufbereitetes Wasser an die Entnahmeeinheit liefert, gesperrt ist. Entsprechend nimmt das Steuermenü der Entnahmeeinheit einen gesperrten Zustand ein und lässt die Ansteuerung des zweiten Geräts nicht zu. Ein energetischer Konflikt zwischen zwei Geräten kann vorliegen, wenn zu wenig Energie zur Verfügung steht, was bei alternativen Energieformen wie Solaranlagen oder Windkraftanlagen vorkommen kann. Dadurch kann ein intelligentes und umweltschonendes Energiemanagement realisiert werden. Ein weiterer Grund für einen energetischen Konflikt ist eine nicht ausreichend dimensionierte elektrische Hausinstallation, sodass aufgrund geringer Kupferdrahtquerschnitte bzw. Absicherung nur begrenzt Strom an die Geräte geleitet werden können, um Erwärmungen und gegebenenfalls Kabelbrände zu vermeiden. Dadurch kann die erfindungsgemäße Entnahmeeinheit auch die Sicherheit einer elektrischen Installation erhöhen.

Bei einer weiteren vorteilhaften Ausführungsform kann ein Löschen eines Steuermenüpunktes in dem Steuermenü ausgeführt werden, wenn ein Gerät von dem Netzwerk entfernt wird. Nachdem das Gerät von dem Netzwerk entfernt wird, wird das Fehlen dieses Geräts automatisch durch die Entnahmeeinheit erkannt, und somit das Geräteregister der Entnahmeeinheit neu aufgesetzt. Entsprechend dem neuen Geräteregister kann das Steuermenü neu zusammengestellt und ein Steuermenüpunkt, der für das zuvor entfernte Gerät stand, wird dabei aus dem neuen Steuermenü gelöscht werden. Beispielsweise kann bei einer weiteren ergänzenden Ausführungsform ein entferntes Gerät erkannt werden, indem das Versenden der physischen Adresse oder anderweitiger Lebenszeichen bei angeschlossenen Geräten in regelmäßigen Zeitabständen oder unmittelbar nach dem Einschalten der Spannungsversorgung erfolgt. Dadurch kann das Geräteregister bei jedem Versenden bestätigt werden, sofern sich die Zusammenstellung der am Netzwerk teilnehmenden Geräte nicht verändert hat.

Sobald ein Gerät vom Netzwerk entfernt wird, kann es keine physische Adresse oder anderweitiges Lebenszeichen in das Netzwerk senden und somit stimmt die Anzahl der physischen Adressen im Netzwerk nicht mit dem Geräteregister überein. Dies kann ein Gerät, insbesondere die Entnahmeeinheit, zum Anlass nehmen ein neues Geräteregister und somit auch ein neues Steuermenü zu erstellen. Durch diese vorteilhaften Ausführungsformen können wiederum in einfacher automatisierter Weise Netzwerke nach dem Wunsch des Nutzers zusammengestellt werden, ohne dass der Nutzer sich teure und zeitaufwendige fachmännische Unterstützung beiholen muss.

Wird nun eine neue physische Adresse des neuen Geräts in der Steuerung der Entnahmeeinheit empfangen, dann kann das alte Geräteregister gelöscht werden und durch das neue Register ersetzt werden, was insbesondere Rechnerleistung in der Steuerung der Entnahmeeinheit spart. Alternativ kann das alte Geräteregister durch das neue Geräteregister überschrieben werden, was ebenfalls eine Ersparnis bei der Rechnerleistung bewirken kann. Eine weitere Alternative beinhaltet, dass das alte Geräteregister zu einem neuen Geräteregister modifiziert wird, indem für ein neues Gerät eine neue Adresszeile in dem Geräteregister angelegt wird und/oder für ein entferntes Gerät eine alte Adresszeile gelöscht oder deaktiviert wird. Dadurch kann ein protokollartiges Geräteregister erzeugt werden, welches beispielsweise für eine spätere Fehleranalyse verwendet werden kann.

Ein Sortieren des Geräteregisters kann anhand von Eigenschaften der physischen Adressen der Geräte und eines Kennzeichnens der jeweiligen physischen Adresse mit einer Netzwerkidentifikation erfolgen. Dabei wird eine Reihenfolge der Geräte in dem Geräteregister erstellt, die sich nach der Seriennummer der Geräte, nach dem Alphabet, nach Funktionen, nach Zahlen, nach der Leistung der Geräte, nach dem Anschlussdatum der Geräte an das Netzwerk und/oder nach der Verbindungsdauer der Geräte mit dem Netzwerk richtet. Die Netzwerkidentifikation ist eine zusätzliche Kennzeichnung der physischen Adresse in dem Geräteregister, anhand der die Position des Geräteregisters bestimmt werden kann. Dadurch kann ein schnell lesbares Geräteregister erstellt werden.

Um ein korrektes Geräteregister bereitzustellen, wird bei einer weiteren Weiterbildung der Erfindung geprüft, ob die Netzwerkidentifikation eindeutig zu einer physischen Adresse zugeordnet ist. Bei einer Fehlzuordnung der Netzwerkidentifikation zu einer physischen Adresse können die physischen Adressen wiederholt versendet werden. Dabei wird insbesondere an der Entnahmeeinheit die Richtigkeit des Geräteregisters überprüft. Ferner kann die Richtigkeit des Geräteregisters bei jedem Gerät im Netzwerk überprüft werden. Die Überprüfung kann jedes Gerät für sich durchführen. Eine Fehlzuordnung kann dazu führen, dass zwei physische Adressen, die jeweils zu unterschiedlichen Geräten gehören, mit einer gleichen Netzwerkidentifikation gekennzeichnet sind.

Bei einer vorteilhaften Ausgestaltung des Verfahrens erfolgt ein Erkennen einer Funktion des Geräts anhand des Geräteregisters. Entsprechend wird die erkannte Funktion als Steuermenüpunkt angelegt. Die physische Adresse kann Informationen über die Art und Funktion des jeweiligen Geräts enthalten. Entsprechend der Funktion kann ein Steuermenüpunkt angelegt werden, der im Kontext der Funktion steht. Das Gerät kann vorzugsweise eine Wasserfunktionseinheit sein, mit der Trinkwasser für die Entnahmeeinheit aufbereitet wird. Sind beispielsweise drei Wasserfunktionseinheiten zum Bereitstellen von Trinkwasser mit einer hohen, einer mittleren und einer niedrigen Temperatur vorgesehen, dann können anhand der jeweiligen Funktion der Wasserfunktionseinheiten die Steuermenüpunkte in der Reihenfolge des Temperaturgefälles zwischen den Wasserfunktionseinheiten beziehungsweise der durch die Wasserfunktionseinheiten bereitgestellten Wassertemperaturen angeordnet werden. So kann ein Steuermenüpunkt für die hohe Temperatur vor dem Steuermenüpunkt für die mittlere Temperatur oder umgekehrt anwendbar sein, während der Steuermenüpunkt der mittleren Temperatur zwischen dem Steuermenüpunkt der niedrigen Temperatur und der hohen Temperatur positioniert sein kann. Es können auch thematische Gruppen von Funktionen innerhalb des Steuermenüs angelegt werden, sodass alle Funktionen, die gefiltertes, kohlensäurehaltiges, gekühltes und/oder erwärmtes in jeweiligen Gruppen nacheinander anwendbar sind. Dies schafft ein intuitiv anwendbares Steuermenü, welches besonders benutzerfreundlich und einfach aufgebaut ist.

Besonders bevorzugt ist eine Entnahmeeinheit, die durch ein Anzeigen eines Steuermenüpunkt eines Geräts und/oder einer Funktion und/oder einer Sperrung der Entnahmeeinheit an einer Anzeige dem Nutzer einen Überblick über den Zustand der Entnahmeeinheit indiziert. Die Anzeige kann für jeden Steuermenüpunkt ein unterschiedliches Symbol verwenden. Das Symbol kann in einer Farbe, einem Ton und/oder einem Bild bestehen.

Für unterschiedliche Steuermenüpunkte können unterschiedliche Anzeigemittel wie LEDs in der Anzeige angesteuert werden. Dadurch können Funktionen wie die Temperatur, der Kohlensäuregehalt und/oder der Filterungsgrad wieder gespiegelt werden. Beispielsweise kann eine hohe Temperatur des Trinkwassers ein rotes Leuchten der Anzeige hervorrufen. Eine niedrige Temperatur des Trinkwassers kann ein blaues Leuchten der Anzeige ergeben. Eine mittlere Temperatur des Trinkwassers kann durch ein orangenes Leuchten der Anzeige signalisiert werden. Ferner kann ein kohlensäurehaltiges Trinkwasser durch ein weißes Leuchten der Anzeige angezeigt werden. Ein gefiltertes Trinkwasser kann durch ein grünes Leuchten der Anzeige indiziert werden. Eine Sperrung der Entnahmeeinheit kann durch eine rot-weiß unterbrochene Anzeige dargestellt werden. Ferner kann die Anzeige für bestimmte Zustände der Entnahmeeinheit oder Funktionen der Geräte blinkend oder kontinuierlich leuchten. Die Anzeige kann ringförmig, punktförmig, strichförmig, flächig, displayartig und/oder durch eine Projektion auf eine Fläche erfolgen. Beispielsweise kann eine ringförmige Anzeige im Bereich des Befehlseingabeelements angeordnet sein. Die ringförmige Anzeige kann zwischen dem Befehlseingabeelement und der Entnahmeeinheit positioniert sein. Es ist auch möglich, einen Bereich oder eine Fläche des Befehlseingabeelements mit der Anzeige auszustatten. Alternativ kann eine projizierende Lichtquelle an der Entnahmeeinheit, insbesondere in einem Ausfluss und/oder dem Befehlseingabeelement angeordnet werden.

Eine Weiterbildung der optischen Anzeige stellt ein Display oder eine Projektion dar, die Bilder im Kontext des Zustandes der Entnahmeeinheit oder der angewählten Funktion im Steuermenü wiedergeben. Beispielsweise kann während der Entnahme von Trinkwasser ein Wassertropfen abgebildet werden. Wird die Entnahmeeinheit auf den Menüpunkt für kaltes Trinkwasser gestellt, kann eine Schneeflocke oder ein Schneemann abgebildet werden. Wird heißes Trinkwasser entnommen, kann ein Thermometer oder ein sonstiges Symbol für Hitze abgebildet werden. Alternativ können auch Worte wie "Hot", "Heiß", "Cold", "Kalt", "Warm", "Sparkling", "Sprudel", "Filtered", "Filter", "Gesperrt" oder "Blocked" projiziert oder auf einem Display abgebildet werden, die einen eindeutigen Hinweis auf die Funktion oder den Zustand der Entnahmeeinheit geben.

Ferner kann ein Zustand der Entnahmeeinheit oder eine Funktion eines Geräts über ein akustisches Ausgabemittel dem Nutzer mitgeteilt werden. Beispielsweise können Worte oder Melodien durch das Befehlseingabeelement und/oder die Entnahmeeinheit und/oder einen externen Lautsprecher ausgegeben werden. Beispielsweise kann für eine hohe Temperatur das Wort "heiß", "hot", "rot" oder "red" ausgegeben werden. Ferner kann auch ein Warnhinweis wie "Vorsicht" ausgegeben werden. Für eine niedrige Temperatur kann "kalt", "cold", "blue" oder "blau" ausgegeben werden. Für gefiltertes Trinkwasser kann beispielsweise "filtered" oder "gefiltert" und für kohlensäurehaltiges Trinkwasser kann beispielsweise "Sparkling" oder "Sprudel" ausgegeben werden.

Ebenso können die genannten Anzeigen verwendet werden, um Zustände der Entnahmeeinheit beim Lesen und Schreiben der Geräteregister anzuzeigen. Solch ein Zustand kann beispielsweise durch ein Blinken oder eine weitere Farbe wie beispielsweise Violett angezeigt werden.

Die unterschiedlichen Anzeigearten haben alle gemein, dass ein Nutzer auf einfache und eindeutige Weise unmittelbar über den Zustand der Entnahmeeinheit und die Funktion des angewählten Geräts unterrichtet wird. Dadurch wird eine hohe Sicherheit und Effizienz für die Benutzung der Entnahmeeinheit gewährleistet.

Durch die Steuerung kann eine gegenseitige Abstimmung mehrerer an der Entnahmeeinheit angeschlossener Geräte erfolgen, die entsprechend der hinter die Steuermenüpunkte hinterlegten Funktionen aus der Entnahmeeinheit entnehmbares Trinkwasser hinsichtlich Temperatur, Kohlensäuregehalt und/oder Filterungsgrad aufbereiten. Beispielsweise können zwei Wasserfunktionseinheiten für heißes Wasser der gleichen Temperatur von in etwa insbesondere 110 °C an die Entnahmeeinheit angeschlossen werden, um die Kapazität für heißes Wasser zu erhöhen. Eine Entnahme aus diesen beiden Wasserfunktionseinheiten kann dabei abwechselnd erfolgen, wobei nur ein Steuermenüpunkt für die Funktion "heißes Wasser" angelegt wird. Ferner können zwei Heißwasseraggregate mit unterschiedlichen hohen Temperaturen von vorzugsweise 110 °C und 85 °C an die Entnahmeeinheit angeschlossen werden. Dabei werden in dem Steuermenü zwei separate Steuermenüpunkte für die jeweiligen hohen Temperaturen angelegt. Alternativ können Wasserfunktionseinheiten für heißes und kaltes Trinkwasser zueinander parallel- oder in Reihe geschaltet werden und zueinander koordiniert werden. Wird beispielsweise kohlensäurehaltiges Wasser aus einer Wasserfunktionseinheit über die Entnahmeeinheit entnommen, dann kann die Steuerung dafür Sorge tragen, dass die Leitungen mit normalem Wasser gespült werden, sodass kein kohlensäurehaltiges Wasser in den Leitungen enthalten bleibt. Insbesondere können Spülmaschinen und Wasserfunktionseinheiten für heißes Wasser miteinander koordiniert werden, um miteinander nicht in einen energetischen Konflikt zu geraten. Diese Koordination kann über eine Energieweiche bzw. eine Energiemesseinrichtung erfolgen. Durch die gegenseitige Abstimmung der angeschlossenen Geräte kann eine optimale Qualität des Trinkwassers zu technisch und energetisch günstigen Konditionen bereitgestellt werden.

Die Energiemesseinrichtung misst die Stromaufnahme eines externen Verbrauchers wie z.B. einem Geschirrspüler. Ist der Stromverbrauch hoch, können Funktionen an einer angeschlossenen Wasserfunktionseinheit blockiert werden. Somit realisieren die Messeinrichtung und das Verhalten des daran angeschlossenen Gerätes die Funktion einer Energieweiche.

Das Befehlseingabeelement kann als Drehknopf, Druckknopf, Dreh-Druckknopf, Touchscreen, Hebel, Kippschalter und/oder Taste ausgebildet sein. Dabei kann die Anzeige im Bereich des Befehlseingabeelements so angeordnet sein, dass sie aus jeder Position sichtbar ist.

Eine bevorzugte Ausführungsform des Befehlseingabeelements beinhaltet ein Starten einer Ausgabe von Trinkwasser aus der Entnahmeeinheit durch einen Sprachbefehl an einen vorzugsweise intelligenten Sprachassistenten. Beispielsweise kann der Befehl "Water" oder "Wasser" an den Sprachassistenten gerichtet werden. Ferner kann der Befehl um eine Eigenschaft wie "hot", "heiß", "cold", "kalt", "sparkling", "Sprudel", "filtered" und/oder "filter" ergänzt werden. Der intelligente Sprachassistent kann in die Entnahmeeinheit eingebaut oder extern zu der Entnahmeeinheit vorliegen und dabei an das Netzwerk angeschlossen sein.

Vorteilhafterweise kann ein Starten einer Ausgabe von Trinkwasser durch eine Berührung der Entnahmeeinheit erfolgen, wobei ein kapazitiver Sensor die Berührung erkennt. Durch eine einfache Berührung kann eine Entnahmeeinheit gestartet werden, wenn sie vorzugsweise nur mit einem oder mehreren Wasserfunktionseinheiten verbunden ist, die kein heißes Wasser bereitstellen. Dadurch kann eine erhöhte Sicherheit gegen ein Verbrühen der Hände für den Nutzer gewährleistet werden. Alternativ oder ergänzend kann durch eine Betätigung eines externen Sensors die Ausgabe des Wassers gestartet werden. Der externe Sensor kann ein Fußschalter wie etwa eine mit dem Fuß betätigbare Lichtschranke sein. Eine Sicherheitsschaltung könnte daher durch ein gleichzeitiges betätigen des Befehlseingabeelements an der Entnahmeeinheit und des externen Fußschalters ausgebildet sein. Insbesondere kann mit dem Fußschalter ein Steuermenüpunkt angewählt werden.

Besonders vorteilhaft kann die erfindungsgemäß vorgeschlagene Lösung in einem Netzwerk zur Hausautomatisation verwendet werden. Dazu ist die Entnahmeeinheit Teil einer Hausautomatisation, und kann mit einer zentralen Steuerung der Hausautomatisation kommunizieren. Die zentrale Steuerung kann nach einem Konnektivitätsprinzip die verschiedenen Geräte des Netzwerks miteinander koordinieren und mit der Entnahmeeinheit in einen funktionalen Einklang bringen. Ein Nutzer kann mit seinem mobilen Endgerät wie einem Smartphone über das Netzwerk die Geräte überwachen und steuern. Dazu kann eine App für das mobile Endgerät vorgesehen sein. Somit könnte ein Nutzer den Zustand der Entnahmeeinheit überwachen und gegebenenfalls einen Steuermenüpunkt anwählen und die Entnahmeeinheit starten. Dies ermöglicht eine Fernsteuerung der Entnahmeeinheit.

Weitere vorteilhafte Ausgestaltungen der Erfindung sind in den Unteransprüchen und der folgenden Figurenbeschreibung offenbart. Es zeigen:
- Fig. 1: eine schematische Darstellung eines Netzwerks mit verschiedenen Geräten, wobei eines der Geräte eine Entnahmeeinheit ist, die fluidleitend an Wasserfunktionseinheiten angeschlossen ist,
- Fig. 2: a und b eine Entnahmeeinheit mit einem Befehlseingabeelement, welches eine ringförmige Anzeige aufweist,
- Fig. 3: a und b jeweils eine Entnahmeeinheit, die an eine Wasserfunktionseinheit beziehungsweise an zwei zueinander parallel geschalteten Wasser-funktionseinheiten angeschlossen ist,
- Fig. 4: eine Entnahmeeinheit, die an eine Wasserfunktionseinheit angeschlossen ist, die ihre Energie zusammen mit einem Geschirrspüler über eine Energiemesseinrichtung bezieht, wobei die Anzeige am Befehlseingabe-element eine Blockade anzeigt,
- Fig. 5: eine Entnahmeeinheit, die zwei in Reihe geschaltete Wasserfunktions-einheiten aufweist,
- Fig. 6: a bis c Entnahmeeinheiten, die durch eine Berührung eines kapazitiven Sensors und/oder eines Fußschalters gestartet wird,
- Fig. 7: eine Entnahmeeinheit, die an eine zentrale Steuerung im Netzwerk angeschlossen ist, die über ein mobiles Endgerät ferngesteuert ist,
- Fig. 8: eine schematische Darstellung des Erstellens eines neuen Steuermenüs aus einem neuen Geräteregister, und
- Fig. 9: a bis c ein Ablaufdiagramm des Erstellens eines neuen Geräteregisters nach dem Anschließen eines neuen Geräts.

In den unterschiedlichen Figuren sind gleiche Teile stets mit denselben Bezugszeichen versehen, weswegen diese in der Regel auch nur einmal beschrieben werden.

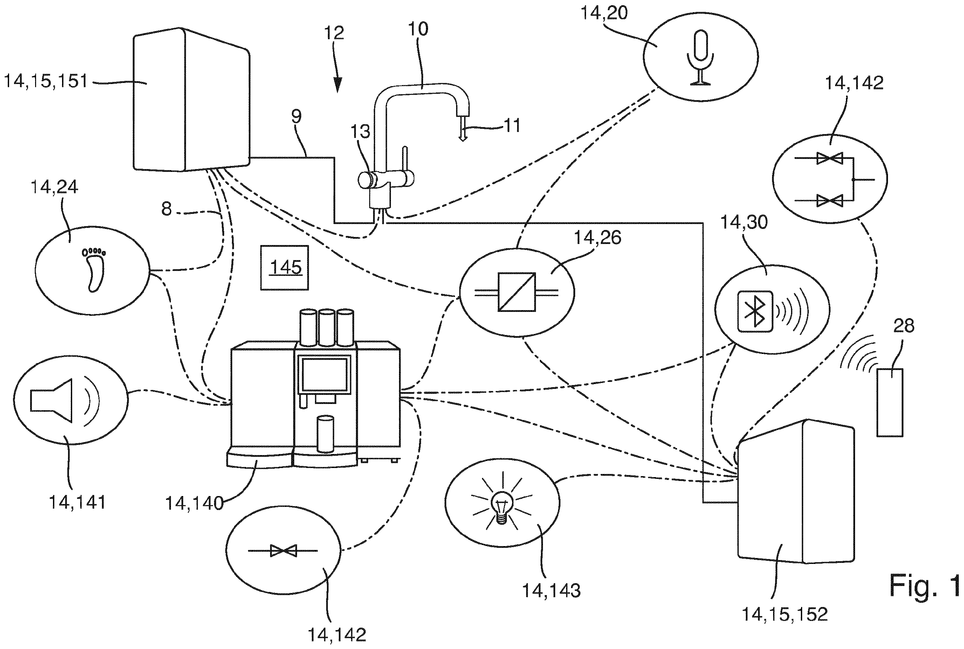

Figur 1 zeigt ein Netzwerk 12, welches eine Entnahmeeinheit 10 für Trinkwasser 11 umfasst. Die Entnahmeeinheit 10 ist über Datenverbindungen 8 mit weiteren Geräten 14 verbunden. Die weiteren Geräte 14 sind über die Datenverbindung 8 mit einer Steuerung 13 der Entnahmeeinheit 10 verbunden. Durch die Steuerung 13 richtet sich die Entnahmeeinheit 10 auf die Geräte 14 des Netzwerks 12 ein, sodass die Funktionen der Entnahmeeinheit 10 entsprechend der Funktionen F der Geräte 14 angepasst wird. Über die Steuerung 13 der Entnahmeeinheit 10 können die am Netzwerk 12 teilnehmenden Geräte 14 koordiniert und angewählt werden. Die unterschiedlichen Geräte 14 melden sich automatisch bei der Steuerung 13 an, sodass ein Nutzer keinerlei Maßnahmen ergreifen muss, um die Entnahmeeinheit 10 mit dem Netzwerk 12 und den darin befindlichen teilnehmenden Geräten 14 zu synchronisieren.

Die Datenverbindung erfolgt im Ausführungsbeispiel über einen CAN-Bus. Der CAN-Bus arbeitet nach dem "Multi-Master-Prinzip" d. h., er verbindet mehrere gleichberechtigte Steuergeräte. Das CAN-Netzwerk wird vorzugsweise als Linienstruktur aufgebaut. Stichleitungen sind in eingeschränktem Umfang zulässig. Auch ein sternförmiger Bus ist möglich. Die Kommunikation erfolgt mit Telegrammen nach einem vorgegebenen CAN-Protokoll. Die Telegramme haben einen genormten Aufbau in Form von Telegrammrahmen, die als Frames bezeichnet werden.

Als Geräte 14 sind Kaffeemaschinen 140, Lautsprecher 141, intelligente Ventile 142 zur Steuerung von fluide Strömen innerhalb einer fluidleitenden Verbindung 9, Beleuchtung 143, Geschirrspüler 145, externe Sensoren 24 zum Betätigen der Entnahmeeinheit 10, intelligente Sprachassistenten 20, zentrale Steuerungen 26 für eine Hausautomatisation, mobile Endgeräte 28 wie Smartphones und/oder Smartpads, Funkverbindungen 30 wie Bluetooth- und/oder WiFi-Antenne und/oder Wasserfunktionseinheiten 15 möglich. Die jeweiligen Geräte 14 können in einfacher oder mehrfacher Ausführung in dem Netzwerk 12 enthalten sein. Insbesondere die Wasserfunktionseinheiten 15 können beispielsweise unterschiedliche Trinkwasserarten 11 bereitstellen, sodass wenigstens eine erste und eine zweite Wasserfunktionseinheit 151, 152 für gefiltertes, kohlensäurehaltiges, kaltes, warmes und/oder heißes Wasser vorgesehen sein können. Es können auch noch weitere Wasserfunktionseinheiten 15 in das Netzwerk 12 eingefügt werden. Die Wasserfunktionseinheiten 15 sind über die fluidleitende Verbindung (Wasserleitungen) 9 mit der Entnahmeeinheit 10 verbunden.

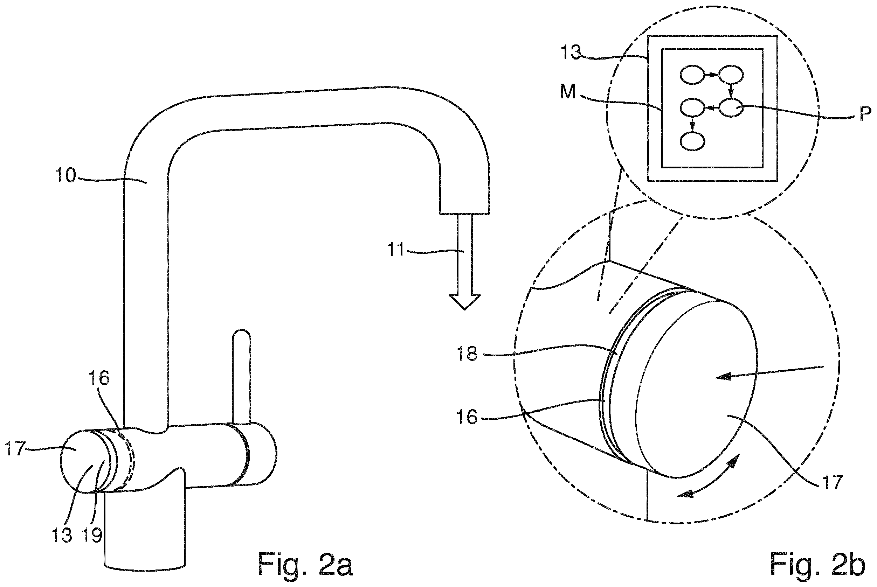

Figur 2a) bildet eine Entnahmeeinheit 10 ab, die einen Mischhebel aufweist. Ferner umfasst die Entnahmeeinheit 10 ein Befehlseingabeelement 17, welches als Dreh-Druckknopf 19 ausgebildet ist. Der Dreh-Druckknopf 19 kann zum Steuern der Entnahmeeinheit 10 verwendet werden, wobei der Knopf 19 gedreht und in einer axialen Richtung gedrückt werden kann. Zwischen dem Befehlseingabeelement 17 und der Entnahmeeinheit 10 ist eine ringartige Anzeige 16 angeordnet, die um einen Abschnitt der Entnahmeeinheit 10 ringartig herumläuft. Es sind auch alternative Formen für die Anzeige 16 denkbar, wobei eine flächige, strichartige, sternartige, kreisförmige, quadratische oder rechteckige Ausformung der Anzeige 16 möglich ist.

In Figur 2b) ist eine vergrößerte Ansicht des Befehlseingabeelements 17 dargestellt. Mittels des Befehlseingabeelement 17 kann ein Nutzer der Entnahmeeinheit 10 durch ein Steuermenü M der Steuerung 13 navigieren und unterschiedliche Funktionen und für die Entnahmeeinheit 10 an das Netzwerk 12 angeschlossene Geräte 14 anwählen. Dabei kann ein Nutzer durch Drehen des Dreh-Druckknopfs 19 zwischen Steuermenüpunkten P hin und her schalten und durch das Drücken des Dreh-Druckknopfs 19 einen Steuermenüpunkt P bestätigen. Das Drehen ist in der Figur 2b) durch einen gebogenen Doppelpfeil und das Drücken durch einen geraden Pfeil symbolisiert. Das Steuermenü M ist ein Programm, das auf einer Hardwareplatine der Steuerung 13 abgespielt wird, wobei das Programm des Steuermenüs M durch das Befehlseingabeelement 17 bedient wird. Die Hardwareplatine kann in der Entnahmeeinheit 10 oder extern dazu positioniert sein. Insbesondere kann die Hardwareplatine in dem Befehlseingabeelement angeordnet sein. Die Steuermenüpunkte P werden automatisch in das Steuermenü M hinein programmiert, wenn ein Gerät 14 in dem Netzwerk 12 angeschlossen wird. Ebenso werden Steuermenüpunkte P automatisch aus dem Steuermenü M gelöscht, wenn Geräte 14 aus dem Netzwerk 12 entfernt werden. Das Steuermenü M mit den Steuermenüpunkten P und einer schematischen Navigation durch das Steuermenü M ist in der Figur 2b) in einem Kreis dargestellt.

Die Anzeige 16 ist eine Farbanzeige, hinter die Anzeigemittel 18 hinterlegt sind. Die Anzeigemittel 18 können farbige LEDs sein, die in rot, gelb, orange, blau, weiß, violett und/oder grün leuchten. Es können auch noch weitere Farben durch die LED realisiert werden. Ferner können die Anzeigemittel 18 blinken oder ein kontinuierliches Licht aussendet. Die Anzeige 16 kann auch einen kontinuierlichen Wechsel zwischen den Farben anzeigen. Außerdem können auch Farbmuster wie rot-weiß an der Anzeige 16 angezeigt werden.

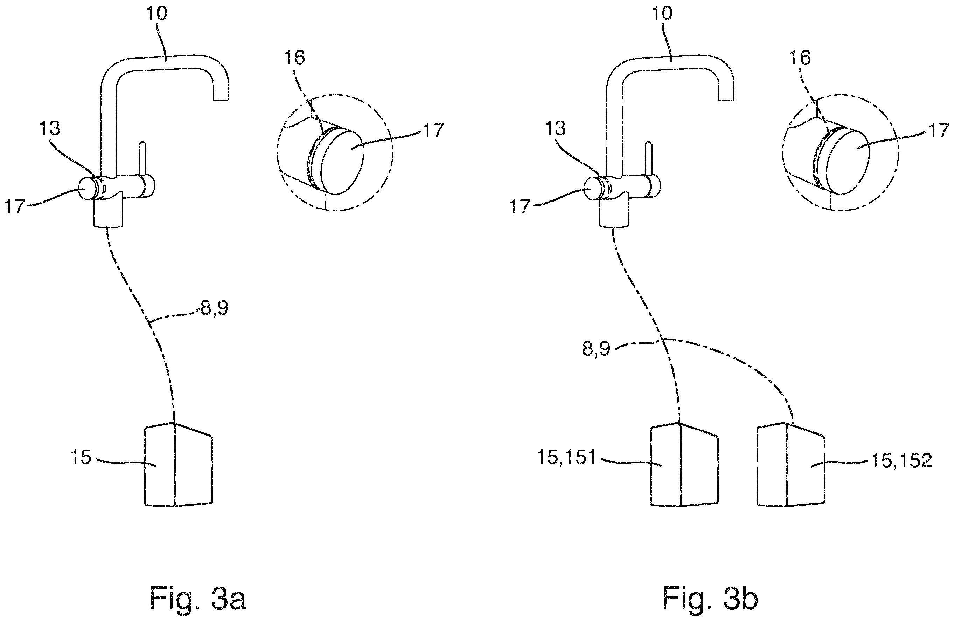

Figur 3a) zeigt eine einfache Verbindung aus einer Entnahmeeinheit 10 und einer Wasserfunktionseinheit 15. Die Wasserfunktionseinheit 15 ist mittels einer Datenverbindung 8 und einer fluidleitenden Verbindung 9 an der Entnahmeeinheit 10 angeschlossen. Die Wasserfunktionseinheit 15 kann beispielsweise ein Heißwasser- oder Kochendwasseraggregat sein. Das Wasser mit der hohen Temperatur kann aus der Entnahmeeinheit 10 herausgeleitet werden, indem die Wasserfunktionseinheit 15 durch die Steuerung 13 angesteuert wird. Dazu wird in dem Steuermenü M ein Steuermenüpunkt P über das Befehlseingabeelement 17 angewählt und bestätigt. Durch das Bestätigen wird schließlich die Wasserfunktionseinheit 15 gestartet. Alternativ kann die Wasserfunktionseinheit 15 ein Kaltwasser-, Filterwasser- und/oder kohlensäurehaltiges Wasseraggregat sein. Diese Aggregate werden durch separate Steuermenüpunkte P in dem Steuermenü M repräsentiert und angewählt.

Eine weitere Ausführung besteht, wie in Figur 3b) gezeigt, in der Kombination zweier Wasserfunktionseinheiten 151, 152, die zueinander parallelgeschaltet sind. Beispielsweise kann eine erste Wasserfunktionseinheit 151 für Kaltwasser und eine zweite Wasserfunktionseinheit 152 für Heißwasser bereitgestellt werden. Die beiden Wasserfunktionseinheiten 151, 152 können separat durch Steuermenüpunkte P in dem Steuermenü M repräsentiert werden und mittels dem Befehlseingabeelement 17 angewählt werden. Alternativ kann eine Kombination mit einer Wasserfunktionseinheit 15 für Filterwasser und/oder kohlensäurehaltiges Wasser erfolgen.

Die Anzeige 16 leuchtet rot beim Anwählen eines Steuermenüpunkts P, der für kochendes Wasser steht, während die Anzeige 16 bei einem Steuermenüpunkt P einer Kaltwasserauswahl blau leuchtet. Für gefiltertes Wasser kann die Anzeige beim Anwählen des entsprechenden Steuermenüpunkts P grün leuchten und für kohlensäurehaltiges Wasser kann die Anzeige 16 weiß leuchten.

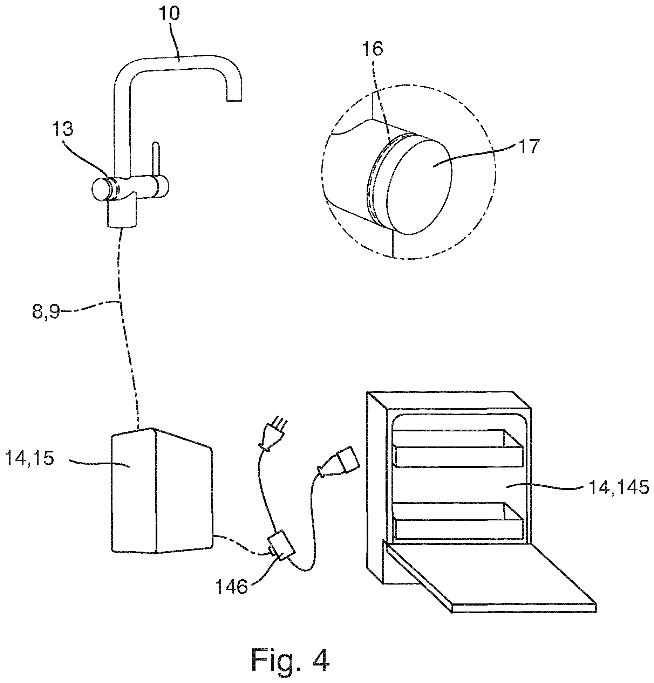

Wie in Figur 4 offenbart, besteht die Möglichkeit die Entnahmeeinheit 10 mit einer Wasserfunktionseinheit 15 zu verbinden, während im Netz 12 eine Geschirrspülmaschine 145 angeschlossen ist. Da sowohl die Wasserfunktionseinheit 15 als auch die Geschirrspülmaschine 145 eine hohe Leistungsaufnahme aufweisen, kann zwischen die beiden Geräten 14 eine Energiemesseinrichtung 146 geschaltet werden. Mittels der Energiemesseinrichtung 146 kann verhindert werden, dass die Wasserfunktionseinheit 15 angewählt werden kann, wenn die Geschirrspülmaschine 145 eingeschaltet ist. Der Steuermenüpunkt P für die Wasserfunktionseinheit 15 ist gesperrt, wobei die Sperrung durch ein rot-weiß gestricheltes Muster an der Anzeige 16 angezeigt wird. Während der Sperrung ist ein Betätigen des Befehlseingabeelements 17 nicht möglich und führt nicht zur Ansteuerung der Wasserfunktionseinheit 15. Solch ein Konflikt zwischen zwei Geräten 14 kann immer dann auftreten, wenn zwei Geräte 14 gleichzeitig betrieben werden sollen, die hohe Leistungsaufnahmen aufweisen. Anstelle der Geschirrspülmaschine 145 kann auch eine Waschmaschine oder eine Klimaanlage infrage kommen.

Die Energiemesseinrichtung 146 misst die Stromaufnahme eines externen Verbrauchers z.B. eines Geschirrspülers. Ist der Stromverbrauch hoch, können Funktionen an der Wasserfunktionseinheit 15 blockiert werden. Somit realisieren die Messeinrichtung 146 und das Verhalten des daran angeschlossenen Gerätes die Funktion einer Energieweiche. Das Element 146 selber muss hierzu keine Energie schalten oder umleiten, auch wenn letzteres nicht ausgeschlossen bzw. im Rahmen der vorliegenden Erfindung ebenfalls mit umfasst ist.

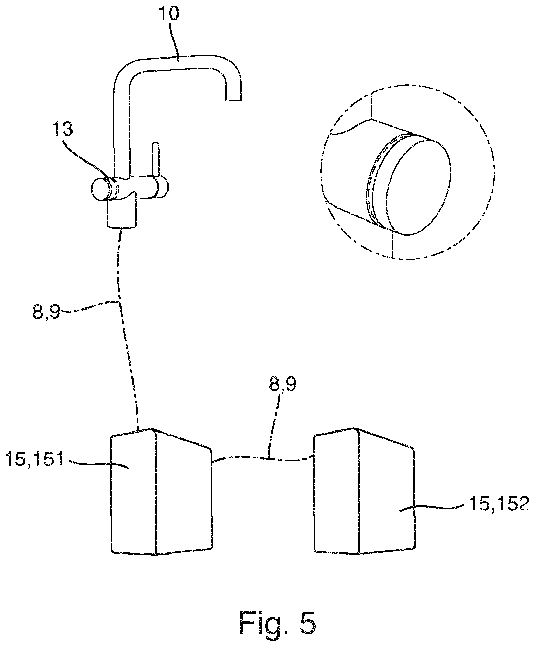

Figur 5 zeigt eine weitere Konfiguration von zwei einer Wasserfunktionseinheiten 151, 152. Die beiden einer Wasserfunktionseinheiten 151, 152 sind in Reihe geschaltet. Sie können als Wasserquellen für kochendes Wasser dienen. Beispielsweise können beide einer Wasserfunktionseinheiten 151, 152 Wasser gleicher Temperatur vorhalten. Die Temperatur des unter Druck stehenden Kochendwassers innerhalb des Kochwasseraggregats kann vorzugsweise in etwa 110 °C betragen. Dadurch wird die Kapazität für derart temperiertes Wasser erhöht. Das Wasser kann abwechselnd aus den einer Wasserfunktionseinheiten 151, 152 bezogen werden. Alternativ können zwei unterschiedliche Temperaturen in den einer Wasserfunktionseinheiten 151, 152 vorgehalten werden und je nachdem welcher Steuermenüpunkt P angewählt wird, eine der beiden Funktionseinheiten aktiviert werden. Beispielsweise kann ein Wasserfunktionseinheit 151 Wasser mit 110 °C und die andere Wasserfunktionseinheit 152 mit 85 °C vorhalten.

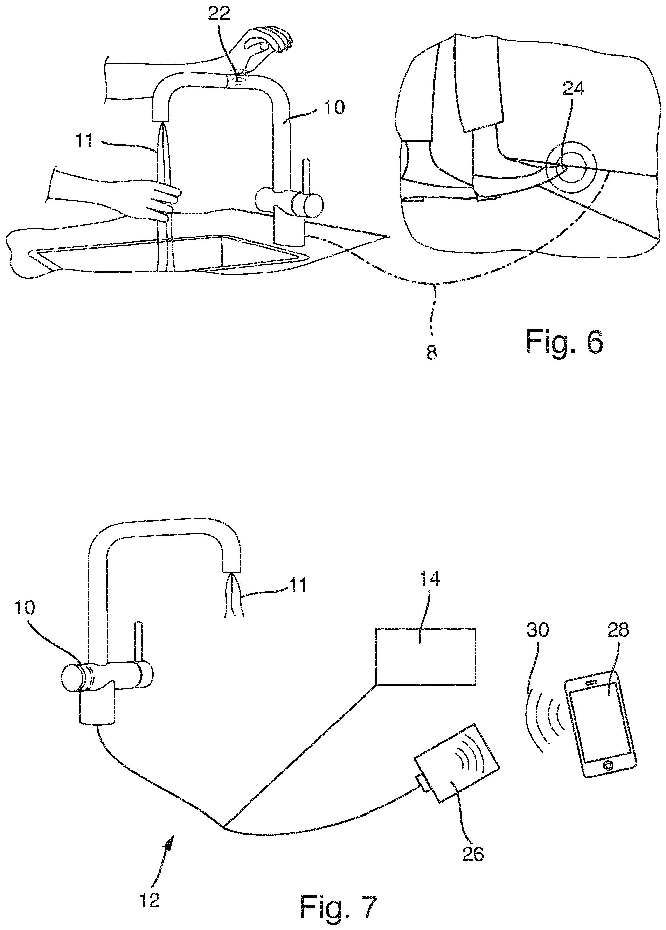

In Figur 6 ist ein kapazitiver Sensor 22 gezeigt, der in der Entnahmeeinheit 10 angeordnet ist und über den Körper der Entnahmeeinheit 10 durch eine Berührung mit der Hand betätigt werden kann. Ferner kann ein zusätzlicher externer Sensor 24 mittels des Fußes eines Nutzers betätigt werden. Dieser externe Sensor 24 ist mit einer Datenverbindung 8 mit der Entnahmeeinheit 10 verbunden. Die Datenverbindung 8 kann eine drahtlose als auch eine drahtgebundene Verbindung sein. Der externe Sensor 24 kann auch über das Netzwerk 12 oder unmittelbar mit der Entnahmeeinheit 10 verbunden sein. Durch ein gleichzeitiges Betätigen des externen Sensors 24 und des kapazitiven Sensors 22 wird Trinkwasser 11 aus der Entnahmeeinheit 10 geleitet. Die Kombination des kapazitiven Sensors 22 mit dem externen Sensor 24 bietet eine erhöhte Sicherheit. Insbesondere kann eine Kombination aus den beiden Sensoren 22, 24 mit einer Wasserfunktionseinheit 15 für heißes und kochendes Wasser verwendet werden.

Figur 7 beinhaltet eine Entnahmeeinheit 10, die über das Netzwerk 12 mit wenigstens einem Gerät 14 als auch einer zentralen Steuerung 26 einer Hausautomatisation verbunden ist. Die zentrale Steuerung 26 ist mit einer Funkantenne ausgestattet, sodass sie eine Funkverbindung 30 zu einem mobilen Endgerät 28 herstellen kann. Durch das mobile Endgerät 28, was ein Smartphone oder ein Smartpad oder ein sonstiges mobiles Gerät sein kann, kann die Entnahmeeinheit 10 gesteuert und überwacht werden. Beispielsweise kann eine App auf das mobile Endgerät 28 aufgespielt werden, welches für die Steuerung und Überwachung der Entnahmeeinheit 10 verwendet werden kann.

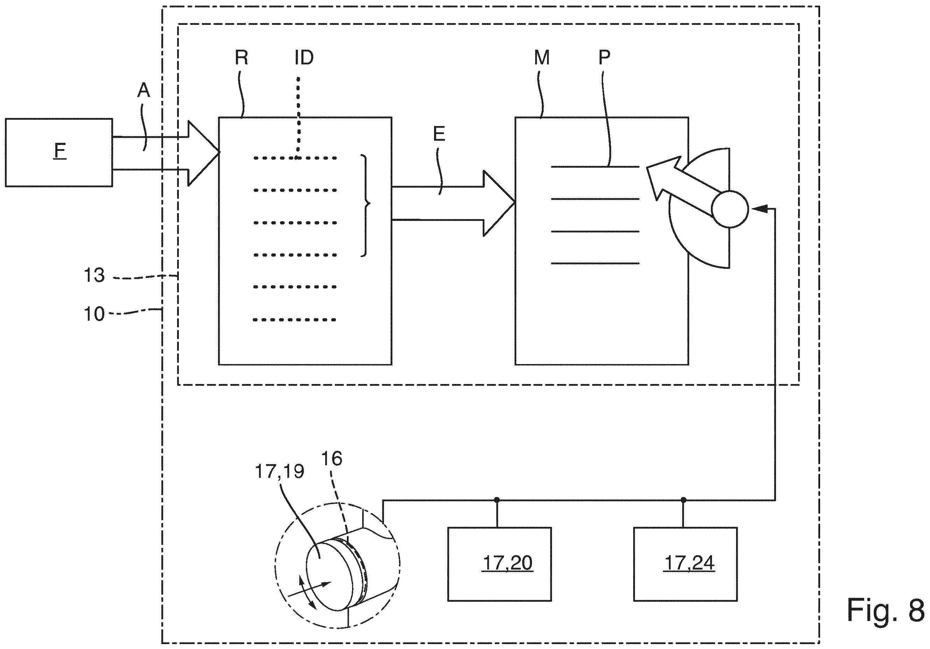

In Figur 8 ist das Erstellen E des Steuermenüs M für neue Funktionen F dargestellt. Wird ein neues Gerät 14 an das Netzwerk 12 angeschlossen, dann kommt eine neue Funktion F zu den schon bestehenden Funktionen in das Netzwerk hinzu. Betrifft diese neue Funktion F die Entnahmeeinheit 10, wirkt sich diese neue Funktion F auf das Steuermenü M aus.

Das neue Gerät 14 sendet eine physische Adresse A an die Steuerung 13 der Entnahmeeinheit 10. Die physische Adresse A wird in der Steuerung 13 in ein neu angelegtes Geräteregister R eingetragen. In dieses Geräteregister R können insbesondere auch physische Adressen A von Geräten 14 abgelegt werden, die die Entnahmeeinheit 10 nicht beeinflussen. Die physischen Adressen A werden in dem Geräteregister R sortiert und mit Netzwerkidentifikation ID versehen. Anschließend wird vorzugsweise ein die Entnahmeeinheit 10 betreffender Teil der Netzwerkidentifikationen ID dazu verwendet ein neues Steuermenü M zu kompilieren. Dabei werden Steuermenüpunkte P entsprechend der Netzwerkidentifikationen ID in dem Steuermenü M der Steuerung 13 angelegt. Die Steuermenüpunkte P können über Befehlseingabeelemente 17 angewählt werden. Beispielsweise kann der Dreh-Druckknopf 19 und/oder ein intelligenter Sprachassistent 20 und/oder ein externer Sensor 24 und/oder ein anderes vorhergehend beschriebenes Befehlseingabeelement 17 verwendet werden. Entsprechend der Steuermenüpunkte P leuchtet die Anzeige 16 in einer Farbe, die die angewählte Funktion F widerspiegelt.

Als physische Adresse A dient im nachfolgenden Beispiel eine für jedes Gerät, welches an das Netzwerk angeschlossen werden kann, eindeutig vergebene Seriennummer. Die Seriennummer wird bei der Produktion im Werk vergeben und fest ins Gerät einprogrammiert. Die Seriennummer hat folgende Funktionen:
- Eindeutige Nummer für CAN Adresszuordnung (Seriennummer wird weltweit nur 1x vergeben)
- Firmware Kompatibilität feststellbar
- Herstelldatum soll erkennbar sein
- Prüfgerät und somit auch Herstellungsort
- Genaue Hardwareversion (z.B. für Ersatzteile)
- Formfaktor und Anschlüsse für den Endkunden (Kompatibilität von Zubehör)

Die Seriennummer ist im Ausführungsbeispiel 64 Bit lang und besteht aus folgenden Teilen:
- Gerätefamilie (6 Bit): Geräte, die eine ähnliche Funktion erfüllen. Auf diese Nummer bezieht sich auch die Bedeutung des sogenannten Feature-Vektors (s.u.). Beispielsweise werden Wasserhahn, Fußschalter, Wasserhahn mit Motor unter der gleichen Gerätefamilie geführt, da sie alle Bediengeräte sind. Damit ist es möglich, einen Fußschalter später ins Sortiment einzuführen und die Funktion ein- und ausschalten auf z.B. einer Trinkwasserentnahmeeinheit zu nutzen, deren Software entwickelt wurde, als es den Fußschalter noch nicht gab.
- Gerätetyp (8 Bit, beginnt mit jeder Gerätefamilie wieder neu): Unterscheidung innerhalb der Gerätefamilie z.B. Wasserhahn, Fußschalter, Wasserhahn mit Motor haben verschiedene Gerätetypen.
- Softwarekompatibilität (5 Bit, beginnt mit jeder Gerätefamilie und Gerätetyp wieder neu): Ändert sich, wenn die Software angepasst werden muss aufgrund von Hardwareänderungen (z.B. zusätzlicher Ausgang für Freilauf eines Ventils).
- Designversion (5 Bit, beginnt mit jeder Gerätefamilie und Gerätetyp wieder neu): Ändert sich, wenn das Aussehen oder die Anschlüsse des Gerätes sich ändern, z.B. aufgrund geänderten Wasserschlauchdurchmessers oder Gehäusebreite. Diese Nummer wird benötigt um das richtige Zubehör und teilweise das richtige Ersatzteil zu wählen.
- Hardwareversion (6 Bit, beginnt mit jeder Gerätefamilie, Gerätetyp und Softwarekompatibilität wieder neu): Nur Hardwareänderungen, die keine Softwareanpassung und keine Funktionsänderung nach sich ziehen, z.B. ein anderes Ventil oder ein anderer Leistungstransistor.
- Prüfeinrichtung (5 Bit, beginnt mit jeder Gerätefamilie und Gerätetyp wieder neu): Eindeutige Laufnummer des Prüfgeräts für die entsprechende Gerätefamilie und den Gerätetyp. In einer Fabrik können mehrere Prüfgeräte für die gleiche Gerätefamilie und Gerätetyp stehen, die aber unterschiedliche Prüfeinrichtungsnummern haben.
- Herstelldatum nach Herstellungsjahr (7 Bit), Herstellungsmonat (4 Bit) und - tag (5 Bit).
- Laufnummer (13 Bit, beginnt mit jeder Gerätefamilie, Gerätetyp, Prüfeinrichtung und Tag wieder neu): Die Laufnummer wird für jede Instanz eines Geräts hochgezählt, so dass mit der Gerätefamilie, Gerätetyp, Prüfeinrichtung und den Datumsangaben eine eindeutige Nummer entsteht.

Die Kompatibilität der Firmware kann mit Gerätefamilie, Gerätetyp und Softwarekompatibilität festgestellt werden und jede Firmware ist für eine Kombination von Gerätefamilie, Gerätetyp und Softwarekompatibilität zugelassen.

Die Angaben Gerätefamilie, Gerätetyp, Softwarekompatibilität, Designversion und Hardwareversion ermöglichen es, sowohl das richtige Zubehör auszuwählen als auch bei einem Produktionsfehler die entsprechend falsch produzierten Teile im Lager zu finden.

In der Software jedes Geräts befindet sich eine als Geräteregister bezeichnete Tabelle mit 32 möglichen Einträgen. Jeder Eintrag hat 16 Byte. In der Tabelle werden alle Geräte, welche im Netzwerk angeschlossen sind, erfasst. Die Software-Routinen, die auf allen Geräten installiert sind, stellen sicher, dass die Teilnehmertabelle auf jedem Gerät im Netzwerk gleich aussieht. Die Tabelle enthält folgende Angaben:

| Beschreibung | Grösse (Bit) | Anz. Werte | Kommentar |
|---|---|---|---|
| Aktuelle CAN-ID | Index der Tabelle | Je nach Arraygrösse | Aktuelle CAN ID= Index des Tabelleneintrags + 10 |
| Gerätefamilie | 6 | 64 | Gerätefamilie des Geräts |
| Bedeutung des Datenfeldes | 2 | 4 | 0=Seriennummer, 1=Gerätefeatures, 2 und 3=Reserviert |
| Seriennummer | 64 (plus 40 für zukünftige Nutzung) | | Geräteseriennummer (beim CAN Aufstart) |
| Gerätefeatures | 104 | 104×1Bit | Unterstützte Gerätefeatures, wobei jedes Bit eine Gerätefeature repräsentiert: Bit=0: Feature ist nicht unterstützt (default); Bit=1: Feature ist unterstützt |
| Lebenszeichen Zeitstempel | 16 | 65536ms =1.1min | Zeitstempel in ms vom letzten Empfang eines Lebenszeichens ("Heartbeat" Telegramm) |

Die Gerätefeatures, also die von dem betreffenden Gerät unterstützten Funktionen, sind für jede Gerätefamilie separat definiert. Jedes Bit beschreibt eine Funktion, die das entsprechende Geräte dem Netzwerk zu Verfügung stellen kann. Andere Geräte können anhand des Gerätetyps und dessen Featureliste feststellen, welche Funktionen sie von einem anderen Gerät nutzen können. Dabei kann im Laufe der Zeit die Funktionsliste erweitert werden, wobei Geräte mit älterer Software nur Funktionen nutzen können, die bei deren Programmierung bereits definiert waren. So wird jedoch sichergestellt, dass ältere Geräte die Basisfunktionen von neuen Geräte nutzen können, ohne das auf dem älteren Gerät ein Softwareupdate notwendig ist.

Anhand des folgenden Beispiels soll dargestellt werden, wie die Gerätefeatureliste funktioniert. In diesem Szenario sind ein Trinkwasserentnahmeeinheit und eine Wasserfunktionseinheit einer ersten Produktgeneration (V1) involviert. Die Featureliste der Wasserfunktionseinheit V1 sieht folgendermaßenen aus:

| Feature Nr. | Beschreibung | Wasserfunktionseinheit V1 unterstützt |
|---|---|---|
| 1 | Kann gefiltertes Wasser liefern | X |
| 2 | Kann gekühltes Wasser liefern | X |
| 3 | Kann kohlensäurehaltiges Wasser liefern | X |
| 4 | Kann Leitung entleeren | X |
| 5 | --- | --- |

Mit diesen Angaben weiß der Trinkwasserentnahmeeinheit nun, welche Wassersorten zu Verfügung stehen und kann sein Bedienmenü entsprechend anpassen.

Nach einiger Zeit kommt eine Wasserfunktionseinheit einer zweiten, nachfolgenden Produktgeneration (V2) auf den Markt, bei der z. B. der Kohlensäuregehalt eingestellt werden kann. Andererseits wurde ein Ventil weggelassen und es kann kein gefiltertes Wasser mehr geliefert werden. Die Featureliste sieht dann folgendermaßen aus:

| Feature Nr. | Beschreibung | Wasserfunktionseinheit V2 unterstützt |
|---|---|---|
| 1 | Kann gefiltertes Wasser liefern | --- |
| 2 | Kann gekühltes Wasser liefern | X |
| 3 | Kann kohlensäurehaltiges Wasser liefern | X |
| 4 | Kann Leitung entleeren | X |
| 5 | Kann kohlensäurehaltiges Wasser mit einstellbarem CO2 Gehalt liefern | X |
| 6 | --- | --- |

Nun gibt es zwei denkbare Szenarien:
a) Die Wasserfunktionseinheit V2 wird in einem Netzwerk eingesetzt, in dem es eine Wasserfunktionseinheit V1 ersetzt. In diesem Netzwerk ist eine Trinkwasserentnahmeeinheit, deren Firmware entwickelt wurde, bevor die Wasserfunktionseinheit V2 entwickelt worden war. Die Firmware dieser Trinkwasserentnahmeeinheit weiß daher nicht, welche Funktion sich hinter dem Feature 5 der Wasserfunktionseinheit verbirgt und ignoriert diese einfach. Diese Trinkwasserentnahmeeinheit stellt fest, das von dieser Wasserfunktionseinheit nur noch gekühltes und kohlesäurehaltiges Wasser geliefert werden kann und stellt dem Benutzter den Menüpunkt für gefiltertes Wasser nicht mehr zur Verfügung.
b) Die Wasserfunktionseinheit V2 wird mit einer Trinkwasserentnahmeeinheit betrieben, deren Firmware das Feature 5 kennt. Das Bedienmenü wird entsprechend angepasst, so dass der Kohensäuregehalt gewählt werden kann. Sollte dieser Trinkwasserentnahmeeinheit mit einer Wasserfunktionseinheit V1 betrieben werden, steht die letztgenannte Einstellmöglichkeit natürlich nicht zur Verfügung, da die Wasserfunktionseinheit V1 den Kohlensäuregehalt nicht einstellen kann.

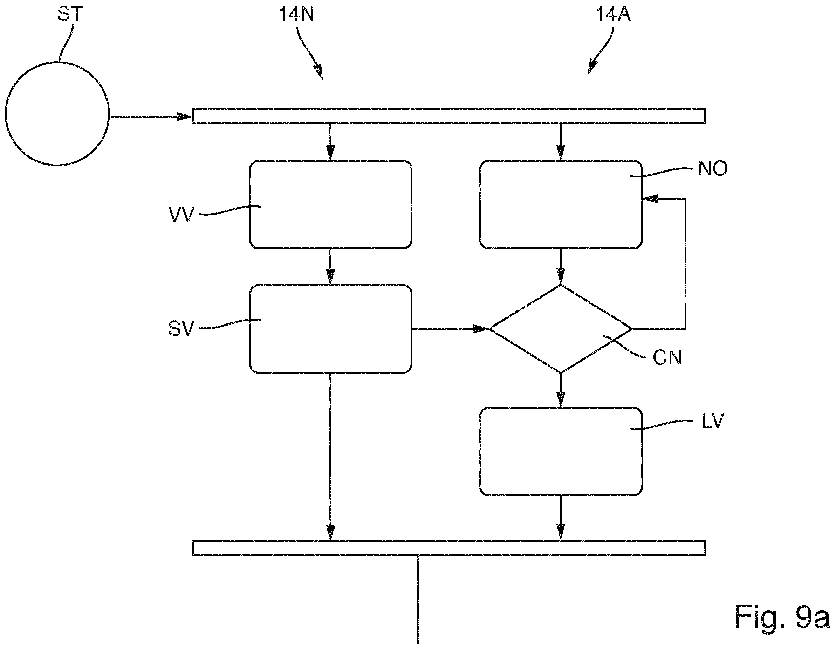

Beim Erstellen eines Geräteregisters, also einer Tabelle mit den im Netz verfügbaren "Teilnehmern", können folgende zwei Szenarien unterschieden werden: Im ersten Fall laufen bereits Geräte im Netz und es kommt ein neues Gerät dazu. Das kann entweder aufgrund von späteren Einstecken am Bus oder durch spätere Energieversorgung des Geräts erfolgen. Im zweiten Fall werden alle Geräte im Netz gleichzeitig eingeschaltet. Der Fall 1 wird auf den Fall 2 übergeführt, indem an allen Geräten im Netz ein Reset durchgeführt wird, indem z.B. jedes Gerät sein altes Geräteregister löscht, sobald ein neues Gerät im Netz erkannt wird. Der Ablauf der Erstellung eines neuen Geräteregisters ist nachfolgend anhand der Figuren 9a bis 9c erläutert.

Die Figuren 9a bis 9c zeigen ein detailliertes Ablaufdiagramm, das das Erzeugen eines neuen Geräteregisters R schematisch darstellt. In Figur 9a wird zum Start ST des Verfahrens zum Erzeugen eines neuen Geräteregisters R ein neues Gerät 14N an das Netzwerk 12 angeschlossen. Dies wird durch den linken Ablaufpfad in Figur 9a dargestellt. Der rechte Ablaufpfad symbolisiert ein schon bestehendes Gerät 14A im Netzwerk 12. Ein Verbinden VV des neuen Geräts 14N veranlasst das neue Gerät 14A zu einem Senden SV einer physischen Adresse A, die beispielsweise eine Seriennummer des Geräts 14A sein kann. Parallel dazu weist das bestehende Gerät 14A einen normalen Betriebszustand NO auf, solange es durch das Senden SV nicht zu einem Löschen LV seines Geräteregisters R initiiert wird. Dazu weist das bestehende Gerät 14A eine Prüfinstanz CN auf, die sofern die Initiierung zum Löschen LV durch das Senden SV nicht erfolgt ist, den normalen Betriebszustand NO belässt. Wird jedoch ein neues Gerät 14N anhand der versendeten physischen Adresse A erkannt, wird das bestehende Geräteregister R durch ein Löschen LV entfernt.

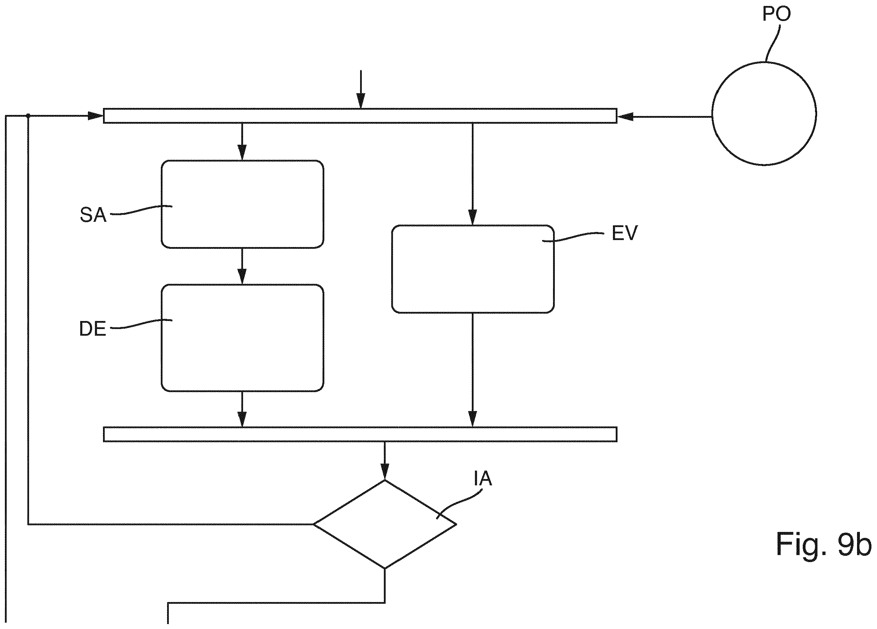

Im darauffolgenden Abschnitt des Ablaufdiagramms in Figur 9b wird zwischen dem neuen und dem bestehenden Geräten 14N, 14A nicht mehr unterschieden. Diesen Zustand nimmt das Netzwerk 12 beziehungsweise die Geräte 14 in dem Netzwerk 12 auch ein, wenn die Spannungsversorgung PO neu eingeschaltet wird. Beim Einschalten der Spannungsversorgung PO werden die Geräteregister R vorzugsweise neu eingerichtet. Dazu wird ein Senden SA aller physischen Adressen A der am Netzwerk 12 teilnehmenden Geräte 14 eingeleitet, wobei die physischen Adressen A Seriennummern sein können. Damit alle physischen Adressen A empfangen werden können, können Geräte 14 mit höherer Priorität eine Zeitverzögerung DE von einer bestimmten Anzahl an Millisekunden ausführen. Dadurch wird sichergestellt das auch niederprioritäre physische Adressen A abgespeichert werden. Ein Eintragen EV der physischen Adressen A in die Geräteregister R erfolgt dabei zeitgleich und so lange bis alle physischen Adressen A in die Geräteregister R eingetragen sind. Ein Abbruch IA des Kompilierens der neuen Geräteregister R erfolgt beispielsweise nach einer bestimmten Anzahl an Sekunden nachdem die letzte physische Adresse A in die Geräteregister R eingetragen wurde. Solange diese Abbruchbedingung nicht erfüllt ist, erfolgt das Eintragen EV der physischen Adressen A in die Geräteregister R.

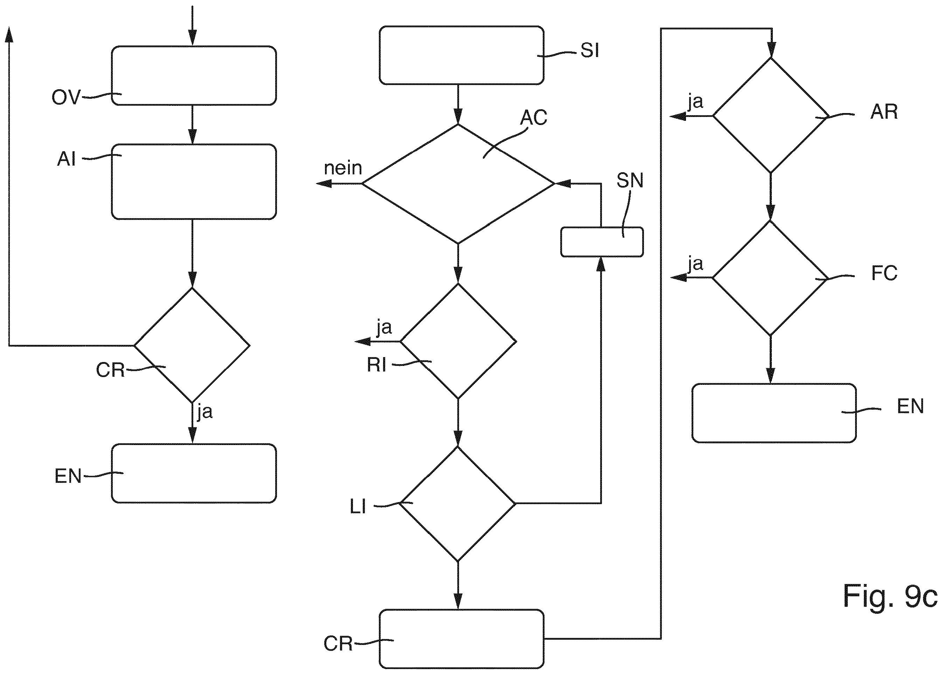

In Figur 9c erfolgt ein Sortieren OV der physischen Adressen A in den Geräteregistern R. Danach erfolgt ein Zuordnen Al von Netzwerkidentifikationen ID entsprechend der Position der physischen Adressen A in den Geräteregistern R nach dem Sortieren OV. In einer weiteren Prüfinstanz CR wird die Fehlerfreiheit der Geräteregister R durch die Geräte 14 geprüft. Wird ein Fehler durch die Prüfinstanz CR in einem Geräteregister R festgestellt, wird das Senden SA aller physischen Adressen A der am Netzwerk 12 teilnehmenden Geräte 14 aus Figur 9b wiederholt. Wird allerdings kein Fehler erkannt, dann wird das Zusammenstellen der Geräteregister R abgeschlossen. Nach dem Abschließen EN kehren die Geräte 14 in den normalen Betriebszustand NO zurück.

Zum Prüfen durch die Prüfinstanz CR wird ein Senden SI der physische Adresse A oder der Netzwerkidentifikation ID an alle Geräte 14 veranlasst. In allen Geräten 14 erfolgt ein Vergleich AC der Geräteregister R mit den empfangenen physischen Adressen A oder Netzwerkidentifikationen ID. Dabei kann ein Fehler erkannt und ein Senden SA aller physischen Adressen A der am Netzwerk 12 teilnehmenden Geräte 14 aus Figur 9b wiederholt werden. Wird bei dem Vergleich AC noch kein Fehler erkannt wird eine Überprüfung RI, ob ein anderes Gerät 14 mit der gleichen physischen Adresse A oder Netzwerkidentifikation ID sendet, ausgeführt. Wird festgestellt, dass ein Gerät 14 mit der gleichen physische Adresse A oder Netzwerkidentifikation ID sendet, wird ein Senden SA aller physischen Adressen A der am Netzwerk 12 teilnehmenden Geräte 14 aus Figur 9b wiederholt. Sendet kein weiteres Gerät 14 mit der gleichen physische Adresse A oder Netzwerkidentifikation ID, dann wird nachfolgend das letzte Gerät LI in dem Geräteregister R erkannt. Das letzte Gerät LI sendet ein Abschlusssignal FR für das Prüfen des Geräteregisters R aus. Falls das letzte Gerät LI nicht erreicht ist, dann wird ein Senden SN einer nächsten physischen Adresse A oder Netzwerkidentifikation ID aus dem Geräteregister R durchgeführt. Wenn nun die übrigen Geräte 14 ebenfalls so wie das letzte Gerät LI ihre Geräteregister R vollständig und eindeutig zusammengestellt haben, versenden die übrigen Geräte 14 eine Bestätigung AR. Wird die Bestätigung AR von wenigstens einem Gerät 14 nicht versendet, da das jeweilige Geräteregister R nicht vollständig und eindeutig zusammengestellt ist, dann wird ein Senden SA aller physischen Adressen A der am Netzwerk 12 teilnehmenden Geräte 14 wiederholt. Eine abschließende Überprüfung FC, ob alle Geräte 14 aus dem Geräteregister R kontrolliert wurden, erfolgt vor dem Abschließen EN des Schreibens der Geräteregister R. Sind nicht alle Geräte 14 aus dem Geräteregister R kontrolliert worden, dann wird ein Senden SA aller physischen Adressen A der am Netzwerk 12 teilnehmenden Geräte 14 wiederholt. Nach dem Abschließen EN kehren die Geräte 14 in den normalen Betriebszustand NO zurück.

Im Anschluss an den erläuterten Ablauf, nach dem das Geräteregister sortiert und überprüft ist, übermittelt jedes Gerät seine Featureliste. Alle Geräte speichern die Featureliste in ihrem Geräteregister ab.

### Bezugszeichenliste:

- A: Adresse
- AC: Vergleich physischer Adressen oder Netzwerkidentifikationen
- AI: Zuordnen
- AR: Bestätigung
- CN: Prüfinstanz
- CR: Prüfinstanz
- DE: Zeitverzögerung
- E: Erstellen des Menüs
- EN: Abschließen
- EV: Erstellen neues Geräteregister
- F: Funktion
- FC: abschließende Überprüfung
- FR: Abschlusssignal
- IA: Abbruch
- ID: Netzwerkidentifikation
- LI: letztes Gerät
- LV: Löschen der Geräteregister
- M: Steuermenü
- NO: normaler Betriebszustand
- OV: Sortieren der Einträge im Geräteregister
- P: Steuermenüpunkt
- PO: Einschalten der Spannungsversorgung
- R: Geräteregister
- RI: Überprüfung
- SA: Senden physischer Adressen aller Geräte
- SI: Senden physischer Adressen oder Netzwerkidentifikationen
- ST: Start
- SV: Senden physische Adresse neues Gerät
- VV: Verbinden neues Gerät
- 8: Datenverbindung
- 9: hydraulische Verbindung
- 10: Entnahmeeinheit
- 11: Trinkwasser
- 12: Netzwerk
- 13: Steuerung
- 14: Gerät
- 140: Kaffeemaschine
- 141: Lautsprecher
- 142: Ventil
- 143: Licht
- 145: Geschirrspüler
- 146: Energiemesseinrichtung
- 14N: neues Gerät
- 14A: altes Gerät
- 15: Wasserfunktionseinheit
- 151: erste Wasserfunktionseinheit
- 152: zweite Wasserfunktionseinheit
- 16: Anzeige
- 17: Befehlseingabeelement
- 18: Anzeigemittel
- 19: Dreh-Druckknopf
- 20: Sprachassistent
- 22: kapazitiver Sensor
- 24: externer Sensor
- 26: zentrale Steuerung
- 28: mobiles Endgerät
- 30: Funkverbindung

## Patentansprüche

1. Verfahren zum Anpassen eines Steuermenüs (M) einer Steuerung (13) einer Entnahmeeinheit (10) für Trinkwasser (11) mit einem Befehlseingabeelement (17) in Form eines Dreh-Druckknopfes (19), zum Wählen eines Steuermenüpunkts (P) des Steuermenüs (M), indem durch Drehen des Dreh-Druckknopfes zwischen Steuermenüpunkten (P) des Steuermenüs (M) gewechselt und durch das Drücken des Dreh-Druckknopfes (19) ein Steuermenüpunkt (P) ausgewählt wird, wobei die Entnahmeeinheit mit ein oder mehreren Geräten kommunikationstechnisch zu einem Netzwerk (12) verbunden ist, **gekennzeichnet durch** die Schritte:
- Verbinden (VV) eines neuen Geräts (14) mit dem Netzwerk (12),
- automatisches Senden (SV) einer physischen Adresse (A) des neuen Geräts (14) über das Netzwerk (12) an die Entnahmeeinheit (10),
- automatisches Erstellen (EV) eines neuen Geräteregisters (R) mit der physischen Adresse (A) des neuen Geräts (14) in der Steuerung (13) der Entnahmeeinheit (10), und
- automatisches Anpassen des Steuermenüs (M) der Entnahmeeinheit (10) an das neue Geräteregister (R) durch automatisches Anlegen eines Steuermenüpunktes (P) in dem Steuermenü (M), der für das neue Gerät (14) steht, sodass das neue Gerät (14) über den Dreh-Druckknopf (19) ansteuerbar wird.

2. Verfahren nach Anspruch 1, **gekennzeichnet durch** ein automatisches Sperren der Entnahmeeinheit (10) durch das Steuermenü (M), wenn die Steuerung (13) der Entnahmeeinheit (10) einen Konflikt zwischen zwei Geräten (14) im Netzwerk (12) erkennt.

3. Verfahren nach einem der vorhergehenden Ansprüche, **gekennzeichnet durch** ein Löschen eines Steuermenüpunktes (P) in dem Steuermenü (M), wenn ein Gerät (14) von dem Netzwerk (12) entfernt wird.

4. Verfahren nach einem der vorhergehenden Ansprüche, **gekennzeichnet durch** ein Löschen (LV) des alten Geräteregisters (R), wenn die Steuerung (13) der Entnahmeeinheit (10) die physische Adresse (A) des neuen Geräts (14) empfangen hat.

5. Verfahren nach einem der vorhergehenden Ansprüche, **gekennzeichnet durch** ein Sortieren (OV) des Geräteregisters (R) anhand von Eigenschaften der physischen Adressen (A) der Geräte (14) und einem Kennzeichnen der jeweiligen physischen Adresse (A) mit einer Netzwerkidentifikation (ID).

6. Verfahren nach Anspruch 5, **gekennzeichnet durch** ein Prüfen (PV), ob die Netzwerkidentifikation (ID) eindeutig zu einer physischen Adresse (A) zugeordnet ist, und bei einer Fehlzuordnung wiederholtes Senden der physischen Adressen (A).

7. Verfahren nach einem der vorhergehenden Ansprüche, bei dem das neue Gerät (14) nach dem Senden (SV) seiner physischen Adresse (A) eine Liste mit unterstützten Funktionen sendet und bei dem die Steuerung (13) der Entnahmeeinheit (10) die von dem neuen Gerät (14) unterstützten Funktionen in dem Geräteregister abspeichert.

8. Verfahren nach einem der vorhergehenden Ansprüche, **gekennzeichnet durch** ein Erkennen einer Funktion (F) des Geräts (14) anhand des Geräteregisters (R) und Anlegen der Funktion (F) als Steuermenüpunkt (M), wobei das Gerät (14) vorzugsweise eine Wasserfunktionseinheit (15) ist.

9. Verfahren nach einem der vorhergehenden Ansprüche, **gekennzeichnet durch** ein Anzeigen eines Steuermenüpunkt (M) eines Geräts (14) und/oder einer Funktion (F) und/oder einer Sperrung der Entnahmeeinheit (10) an einer Anzeige (16) der Entnahmeeinheit (10), wobei für unterschiedliche Steuermenüpunkte (P) unterschiedliche Anzeigemittel (18) angesteuert werden, insbesondere Leuchtdioden mit verschiedenen Farben in der Anzeige (16).

10. Verfahren nach einem der vorhergehenden Ansprüche, **gekennzeichnet durch** eine gegenseitige Abstimmung mehrerer an der Entnahmeeinheit (10) angeschlossener Geräte (14), die entsprechend der hinter die Steuermenüpunkte (P) hinterlegten Funktionen (F) aus der Entnahmeeinheit (10) entnehmbares Trinkwasser (11) hinsichtlich Temperatur, Kohlensäuregehalt und/oder Filterungsgrad aufbereiten.

11. Verfahren nach einem der vorhergehenden Ansprüche, **gekennzeichnet durch** ein Starten einer Ausgabe von Trinkwasser (11) aus der Entnahmeeinheit (10) durch einen Sprachbefehl an einen vorzugsweise intelligenten Sprachassistenten (20).

12. Verfahren nach einem der vorhergehenden Ansprüche, **gekennzeichnet durch** ein Starten einer Ausgabe von Trinkwasser (11) durch eine Berührung (B) der Entnahmeeinheit (10), wobei ein kapazitiver Sensor (22) die Berührung erkennt, und/oder durch eine Betätigung (B) eines externen Sensors (24) insbesondere eines Fußschalters.

13. Verfahren nach einem der vorhergehenden Ansprüche, **dadurch gekennzeichnet, dass** die die Steuerung (13) der Entnahmeeinheit (10) über eine Funkverbindung und/oder eine Drahtverbindung mit dem Netzwerk verbunden wird.

14. Entnahmeeinheit (10) für Trinkwasser (11) umfassend eine Steuerung (13) mit einem Steuermenü (M) mit Steuermenüpunkten (P), ein Befehlseingabeelement (17)in Form eines Dreh-Druckknopfes (19), zum Wählen eines Steuermenüpunkts (P), indem durch Drehen des Dreh-Druckknopfes zwischen Steuermenüpunkten (P) des Steuermenüs (M) gewechselt und durch das Drücken des Dreh-Druckknopfes (19) ein Steuermenüpunkt (P) ausgewählt wird,, wobei die Entnahmeeinheit (10) außerdem eine Schnittstelle zur kommunikationstechnischen Verbindung mit einem Netzwerk (12) aufweist, **dadurch gekennzeichnet, dass** die Steuerung (13) eingerichtet ist, ein neues Gerät (14) im Netzwerk (12) automatisch zu erkennen und eine physischen Adresse (A) des neuen Geräts (14) über das Netzwerk (12) automatisch zu empfangen, und ein neues Geräteregisters (R) mit der physischen Adresse (A) des neuen Geräts (14) in der Steuerung (13) der Entnahmeeinheit (10) zu erzeugen, und das Steuermenü (M) an das neue Geräteregister (R) durch automatisches Anlegen eines Steuermenüpunktes (P) in dem Steuermenü (M), der für das neue Gerät (14) steht, anzupassen, sodass das neue Gerät (14) über den Dreh-Druckknopf (19) ansteuerbar ist.

## Claims

1. Method for adapting a control menu (M) of a controller (13) of a withdrawal unit (10) for drinking water (11) having a command input element (17) in the form of a rotary pushbutton (19), for selection of a control menu item (P) of the control menu (M), wherein switching between control menu items (P) of the control menu (M) is effected by rotating the rotary pushbutton and a control menu item (P) is selected by pressing the rotary pushbutton (19), the withdrawal unit being communicatively connected to one or more devices to form a network (12), **characterised by** the steps:
- connection (VV) of a new device (14) to the network (12),
- automatic transmission (SV) of a physical address (A) of the new device (14) to the withdrawal unit (10) via the network (12),
- automatic creation (EV) of a new device register (R) with the physical address (A) of the new device (14) in the controller (13) of the withdrawal unit (10), and
- automatic adaptation of the control menu (M) of the withdrawal unit (10) to the new device register (R) by automatic creation of a control menu item (P) in the control menu (M) which represents the new device (14), so that the new device (14) can be actuated via the rotary pushbutton (19).

2. Method according to claim 1, **characterised by** automatic blocking of the withdrawal unit (10) by the control menu (M) if the controller (13) of the withdrawal unit (10) detects a conflict between two devices (14) in the network (12).

3. Method according to either one of the preceding claims, **characterised by** deletion of a control menu item (P) in the control menu (M) if a device (14) is removed from the network (12).

4. Method according to any one of the preceding claims, **characterised by** deletion (LV) of the old device register (R) once the controller (13) of the withdrawal unit (10) has received the physical address (A) of the new device (14).

5. Method according to any one of the preceding claims, **characterised by** sorting (OV) of the device register (R) on the basis of properties of the physical addresses (A) of the devices (14) and labelling of the respective physical address (A) with a network identifier (ID).

6. Method according to claim 5, **characterised by** checking (PV) as to whether the network identifier (ID) has been uniquely assigned to a physical address (A) and, in the event of misassignment, repeated transmission of the physical addresses (A).

7. Method according to any one of the preceding claims, wherein the new device (14), after transmission (SV) of its physical address (A), transmits a list containing supported functions, and wherein the controller (13) of the withdrawal unit (10) stores the functions supported by the new device (14) in the device register.

8. Method according to any one of the preceding claims, **characterised by** identification of a function (F) of the device (14) on the basis of the device register (R) and creation of the function (F) as a control menu item (M), the device (14) preferably being a water functional unit (15).

9. Method according to any one of the preceding claims, **characterised by** displaying of a control menu item (M) of a device (14) and/or of a function (F) and/or of blocking of the withdrawal unit (10) on a display (16) of the withdrawal unit (10), wherein different display means (18) are actuated for different control menu items (P), especially light-emitting diodes having different colours in the display (16).

10. Method according to any one of the preceding claims, **characterised by** mutual coordination of a plurality of devices (14) connected to the withdrawal unit (10), which devices prepare drinking water (11) withdrawable from the withdrawal unit (10) in respect of temperature, carbon dioxide content and/or degree of filtration in accordance with the functions (F) stored behind the control menu items (P).

11. Method according to any one of the preceding claims, **characterised in that** dispensing of drinking water (11) from the withdrawal unit (10) is started by a voice command to preferably an intelligent voice assistant (20).

12. Method according to any one of the preceding claims, **characterised in that** dispensing of drinking water (11) is started by touching (B) of the withdrawal unit (10), wherein a capacitive sensor (22) detects the touching, and/or by operation (B) of an external sensor (24), especially a foot switch.

13. Method according to any one of the preceding claims, **characterised in that** the controller (13) of the withdrawal unit (10) is connected to the network via a wireless connection and/or a wired connection.

14. Withdrawal unit (10) for drinking water (11), comprising a controller (13) having a control menu (M) with control menu items (P), a command input element (17) in the form of a rotary pushbutton (19), for selection of a control menu item (P), wherein switching between control menu items (P) of the control menu (M) is effected by rotating the rotary pushbutton and a control menu item (P) is selected by pressing the rotary pushbutton (19), wherein the withdrawal unit (10) also has an interface for communicative connection to a network (12), **characterised in that** the controller (13) is configured automatically to detect a new device (14) in the network (12) and automatically to receive a physical address (A) of the new device (14) via the network (12), and to generate a new device register (R) with the physical address (A) of the new device (14) in the controller (13) of the withdrawal unit (10), and to adapt the control menu (M) to the new device register (R) by automatic creation of a control menu item (P) in the control menu (M) which represents the new device (14), so that the new device (14) can be actuated via the rotary pushbutton (19).

## Revendications

1. Procédé d'adaptation d'un menu de pilotage (M) d'une commande (13) d'une unité de prélèvement (10) dévolue à de l'eau potable (11), comprenant un élément (17) d'entrée d'instructions revêtant la forme d'un bouton poussoir tournant (19), en vue de sélectionner un point (P) du menu de pilotage (M) en ce sens qu'une rotation imprimée au bouton poussoir tournant provoque une variation entre des points (P) dudit menu de pilotage (M), et que l'enfoncement dudit bouton poussoir tournant (19) provoque une sélection d'un point (P) dudit menu de pilotage, l'unité de prélèvement (10) étant techniquement en communication avec un réseau (12) par l'intermédiaire d'un ou de plusieurs appareil(s), **caractérisé par** les étapes suivantes :
- raccordement (VV) d'un nouvel appareil (14) au réseau (12),
- envoi automatique (SV) d'une adresse physique (A) dudit nouvel appareil (14) à l'unité de prélèvement (10), par l'intermédiaire dudit réseau (12),
- instauration automatique (EV), dans la commande (13) de ladite unité de prélèvement (10), d'un nouveau registre (R) d'appareil associé à ladite adresse physique (A) du nouvel appareil (14), et
- adaptation automatique du menu de pilotage (M) de ladite unité de prélèvement (10) audit nouveau registre (R) d'appareil par indexation automatique, dans ledit menu de pilotage (M), d'un point (P) représentatif du nouvel appareil (14), de telle sorte que ledit nouvel appareil (14) puisse être piloté par l'intermédiaire du bouton poussoir tournant (19).

2. Procédé selon la revendication 1, **caractérisé par** un blocage automatique de l'unité de prélèvement (10), par l'intermédiaire du menu de pilotage (M), lorsque la commande (13) de ladite unité de prélèvement (10) repère un conflit entre deux appareils (14) dans le réseau (12).

3. Procédé selon l'une des revendications précédentes, **caractérisé par** un effacement d'un point (P), dans le menu de pilotage (M), lorsqu'un appareil (14) est enlevé du réseau (12).

4. Procédé selon l'une des revendications précédentes, **caractérisé par** un effacement (LV) de l'ancien registre (R) d'appareil lorsque la commande (13) de l'unité de prélèvement (10) a reçu l'adresse physique (A) du nouvel appareil (14).

5. Procédé selon l'une des revendications précédentes, **caractérisé par** une classification (OV) du registre (R) d'appareil, sur la base de propriétés des adresses physiques (A) des appareils (14) et d'une caractérisation, par une identification (ID) de réseau, de l'adresse physique (A) respective.

6. Procédé selon la revendication 5, **caractérisé par** une vérification (PV) visant à établir si l'identification (ID) de réseau est affectée de manière univoque à une adresse physique (A), et par un envoi réitéré des adresses physiques (A) en cas d'affectation erronée.

7. Procédé selon l'une des revendications précédentes, dans lequel, après l'envoi (SV) de son adresse physique (A), le nouvel appareil (14) envoie une liste de fonctions supportées ; et dans lequel la commande (13) de l'unité de prélèvement (10) mémorise, dans le registre d'appareil, les fonctions supportées par ledit nouvel appareil (14).

8. Procédé selon l'une des revendications précédentes, **caractérisé par** un repérage d'une fonction (F) de l'appareil (14) à l'appui du registre (R) d'appareil, et par une indexation de ladite fonction (F) en tant que point (P) du menu de pilotage, ledit appareil (14) étant préférentiellement une unité fonctionnelle hydraulique (15).

9. Procédé selon l'une des revendications précédentes, **caractérisé par** une visualisation, sur un affichage (16) de l'unité de prélèvement (10), d'un point (P) du menu de pilotage d'un appareil (14) et/ou d'une fonction (F) et/ou d'un blocage de ladite unité de prélèvement (10), sachant que des moyens d'affichage (18) différents, en particulier des diodes électroluminescentes de différentes couleurs dans ledit affichage (16), sont piloté(e)s pour différents points (P) dudit menu de pilotage.

10. Procédé selon l'une des revendications précédentes, **caractérisé par** une coordination mutuelle de plusieurs appareils (14) raccordés à l'unité de prélèvement (10) et élaborant, en concordance avec les fonctions (F) mémorisées derrière les points (P) du menu de pilotage, la température, la teneur en dioxyde de carbone et/ou le degré de filtration d'une eau potable (11) pouvant être soutirée à partir de ladite unité de prélèvement (10).

11. Procédé selon l'une des revendications précédentes, **caractérisé par** un démarrage d'une distribution d'eau potable (11), à partir de l'unité de prélèvement (10), par une instruction verbale délivrée à un assistant vocal (20) préférentiellement intelligent.

12. Procédé selon l'une des revendications précédentes, **caractérisé par** un démarrage d'une distribution d'eau potable (11) suite à un contact (B) avec l'unité de prélèvement (10), ledit contact étant repéré par un capteur capacitif (22) ; et/ou par un actionnement d'un capteur extérieur (24), en particulier d'un commutateur au pied.

13. Procédé selon l'une des revendications précédentes, **caractérisé par le fait que** la commande (13) de l'unité de prélèvement (10) est raccordée au réseau par l'intermédiaire d'une liaison radio et/ou d'une connexion filaire.

14. Unité de prélèvement (10) dévolue à de l'eau potable (11), comprenant une commande (13) munie d'un menu de pilotage (M) incluant des points (P), et un élément (17) d'entrée d'instructions revêtant la forme d'un bouton poussoir tournant (19), en vue de sélectionner un point (P) du menu de pilotage en ce sens qu'une rotation imprimée au bouton poussoir tournant provoque une variation entre des points (P) dudit menu de pilotage (M), et que l'enfoncement dudit bouton poussoir tournant (19) provoque une sélection d'un point (P) dudit menu de pilotage, ladite unité de prélèvement (10) étant dotée, par ailleurs, d'un interface destiné à établir techniquement la communication avec un réseau (12), **caractérisée par le fait que** la commande (13) est agencée en vue de repérer automatiquement un nouvel appareil (14), dans le réseau (12); de recevoir automatiquement une adresse physique (A) du nouvel appareil (14), par l'intermédiaire dudit réseau (12) ; d'engendrer, dans ladite commande (13) de l'unité de prélèvement (10), un nouveau registre (R) d'appareil associé à ladite adresse physique (A) du nouvel appareil (14); et d'adapter le menu de pilotage (M) au nouveau registre (R) d'appareil par indexation automatique, dans ledit menu de pilotage (M), d'un point (P) représentatif du nouvel appareil (14), de telle sorte que ledit nouvel appareil (14) puisse être piloté par l'intermédiaire du bouton poussoir tournant (19).
